# EUROPEAN PATENT APPLICATION

(11) **EP 2 665 056 A2**
(43) Date of publication of application: **20.11.2013**
(21) Application number: 13000975.6
(22) Date of filing: 26.02.2013
(51) Int. Cl.: G09G 5/00, H04N 13/00

(54) **Data buffering apparatus capable of alternately transmitting stored partial data of input images merged in one merged image to image/video processing device and related data buffering method**

(30) Priority: 29.02.2012 US 201261604675 P; 21.02.2013 US 201313772336
(71) Applicant: MediaTek Inc., Hsin-Chu (TW)
(72) Inventor: Fang, Hung-Chi, Yilan County (TW)
(74) Representative: Hoefer & Partner

(57) **Abstract**

A data buffering apparatus (104) includes a plurality of storage devices (114, 116) and a storage controller (112). Each of the storage devices (114, 116) is arranged for only storing a partial data of one of a plurality of input images merged in a merged image when data of the merged image is received at a data input port of the data buffering apparatus. The storage controller (112) is coupled to the storage devices, and arranged for alternately controlling stored partial data of the input images to be transmitted to an image/video processing device (102) when the data of the merged image is received at the data input port.

## Description

The disclosed embodiments of the present invention relate to a data buffering apparatus capable of alternately transmitting stored partial data of input images merged in one merged image to an image/video processing device and related data buffering method according to the pre-characterizing clauses of claims 1 and 8.

The advances in video coding technology and standardization along with the rapid developments and improvements of network infrastructures, storage capacity and computing power enable an increased number of image/video applications nowadays. For example, different video inputs of different views are usually recorded separately and then merged into a single merged video signal. Further video processing (e.g., video compression) may be applied to the merged video signal to generate a processed merged video signal such as a merged video bitstream.

One example of video inputs of different views may be a first video input for a left view that is intended to be viewed by a left eye of a viewer and a second video input for a right view that is intended to be viewed by a right eye of the viewer. The first video input and the second video input are merged into a three-dimensional (3D) video for 3D related applications. A 3D format possessed by the 3D video defines how the first video input and the second video input are merged in the 3D video. The available 3D formats may include a side-by-side format, a top-and-bottom format, a line-interleaved format, a frame sequential format, a column-interleaved format, etc. Hence, a conventional video processing engine may be used to receive and process a merged video (e.g., the 3D video) with a designated format. In general, a format conversion unit is located before the video processing engine for storing the merged video into an external storage device, such as a dynamic random access memory (DRAM), and converting the merged video (e.g., the 3D video) into individual video inputs of different views (e.g., the first video input for the left view and the second video input for the right view). Next, the video processing engine is operative to receive and process respective video inputs generated from the preceding format conversion unit, sequentially. Hence, a processed video generated from the video processing engine would include separate processed video inputs. Besides, to meet the playback requirement of a display apparatus (e.g., a pattern-retarder display panel), another format conversion unit is located after the video processing engine for storing the processed video, including separate processed video inputs, into the external storage device (e.g., the DRAM), and converting the processed video into a merged video having the processed video inputs arranged in a designated display format supported by the display apparatus.

As the conventional video processing engine is arranged to separately and sequentially process the video inputs included in the merged video, a large memory bandwidth and/or additional format conversion circuit/operation are required, which increases the production cost inevitably.

This in mind, the present invention aims at providing a data buffering apparatus capable of alternately transmitting stored partial data of input images merged in one merged image to an image/video processing device and related data buffering method to reduce the required memory bandwidth and/or reduce the number of required format conversion operations.

This is achieved by a data buffering apparatus and a data buffering method according to claims 1 and 8. The dependent claims pertain to corresponding further developments and improvements.

As will be seen more clearly from the detailed description following below, the claimed data buffering apparatus includes a plurality of storage devices and a storage controller. Each of the storage devices is arranged for only storing a partial data of one of a plurality of input images merged in a merged image when data of the merged image is received at a data input port of the data buffering apparatus. The storage controller is coupled to the storage devices, and arranged for alternately controlling the stored partial data of the input images to be transmitted to an image/video processing device when the data of the merged image is received at the data input port.

Besides, the claimed data buffering method includes: when receiving data of a merged image composed of a plurality of input images, utilizing a plurality of storage devices to respectively store partial data of the input images, wherein each of the storage devices only stores a partial data of one of the input images; and alternately controlling the stored partial data of the input images to be transmitted to an image/video processing device.

In the following, the invention is further illustrated by way of example, taking reference to the accompanying drawings. Thereof
FIG. 1 is a block diagram illustrating an image/video processing engine operated under a first condition according to an embodiment of the present invention,
FIG. 2 is a block diagram illustrating the image/video processing engine operated under a second condition according to an embodiment of the present invention,
FIG. 3 is a block diagram illustrating another image/video processing engine operated under a first condition according to an embodiment of the present invention,
FIG. 4 is a block diagram illustrating the image/video processing engine operated under a second condition according to an embodiment of the present invention,
FIG. 5 is a diagram illustrating a first exemplary implementation of the data buffering apparatus shown in FIG. 3/FIG. 4,
FIG. 6 is a diagram illustrating an equivalent circuit of the data buffering apparatus shown in FIG. 5 when a merged video composed of merged images is received,
FIG. 7 is a diagram illustrating another equivalent circuit of the data buffering apparatus shown in FIG. 5 when a merged video composed of merged images is received,
FIG. 8 is a diagram illustrating an equivalent circuit of the data buffering apparatus shown in FIG. 5 when a single video composed of non-merged images is received,
FIG. 9 is a diagram illustrating a second exemplary implementation of the data buffering apparatus shown in FIG. 3/FIG. 4,
FIG. 10 is a diagram illustrating an equivalent circuit of the data buffering apparatus shown in FIG. 9 when a merged video composed of merged images is received,
FIG. 11 is a diagram illustrating an equivalent circuit of the data buffering apparatus shown in FIG. 9 when a single video composed of non-merged images is received,
FIG. 12 is a diagram illustrating a third exemplary implementation of the data buffering apparatus shown in FIG. 3/FIG. 4,
FIG. 13 is a diagram illustrating an equivalent circuit of the data buffering apparatus shown in FIG. 12 when a merged video composed of merged images is received,
FIG. 14 is a diagram illustrating an equivalent circuit of the data buffering apparatus shown in FIG. 12 when a single video composed of non-merged images is received,
FIG. 15 is a diagram illustrating a first exemplary implementation of the data buffering apparatus shown in FIG. 1 /FIG. 2,
FIG. 16 is a diagram illustrating a second exemplary implementation of the data buffering apparatus shown in FIG. 1 /FIG. 2,
FIG. 17 is a diagram illustrating a third exemplary implementation of the data buffering apparatus shown in FIG. 1 /FIG. 2,
FIG. 18, which is a diagram illustrating a fourth exemplary implementation of the data buffering apparatus shown in FIG. 3/FIG. 4,
FIG. 19 is a diagram illustrating an equivalent circuit of the data buffering apparatus shown in FIG. 18 when a merged video composed of merged images is received,
FIG. 20 is a diagram illustrating another equivalent circuit of the data buffering apparatus shown in FIG. 18 when a merged video composed of merged images is received,
FIG. 21 is a diagram illustrating an equivalent circuit of the data buffering apparatus shown in FIG. 18 when a single video composed of non-merged images is received,
FIG. 22 is a diagram illustrating a fourth exemplary implementation of the data buffering apparatus shown in FIG. 1 /FIG. 2, and
FIG. 23 is a block diagram illustrating yet another image/video processing engine according to an embodiment of the present invention.

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

The main concept of the present invention is to use an innovative data buffering mechanism in an image/video processing engine such that the image/video processing engine is capable of processing multiple image/video inputs included in one merged image/video concurrently. Compared to the conventional design, the proposed image/video processing engine therefore can reduce the required DRAM bandwidth and/or reduce the number of required format conversion operations. Further details are described as below.

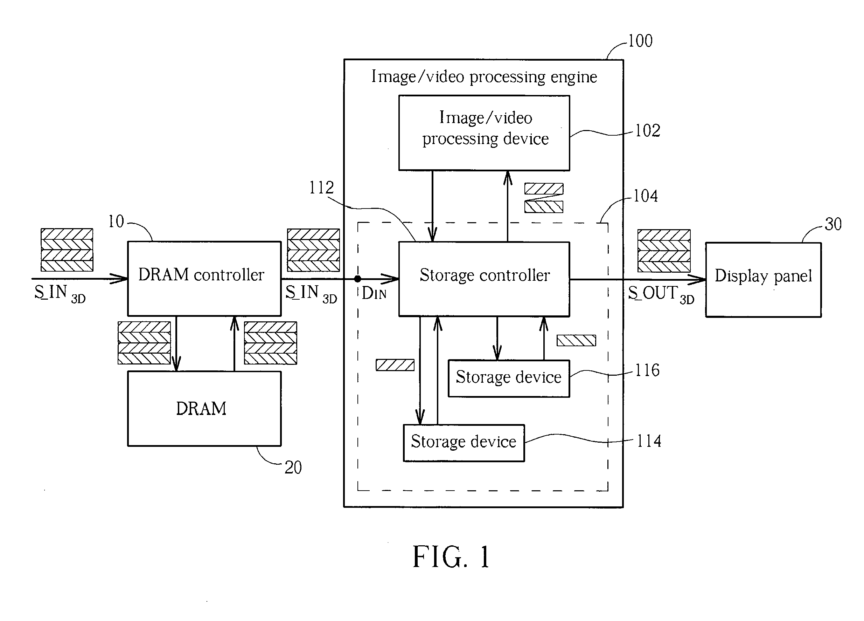

FIG. 1 is a block diagram illustrating an image/video processing engine operated under a first condition according to an embodiment of the present invention. The image/video processing engine 100 may be disposed in a display apparatus such as a 3D television. Hence, the processed video output S_OUT_{3D} generated from the image/video processing engine 100 is transmitted to a display panel 30. As shown in FIG. 1, an external memory (i.e., a DRAM 20) and a memory controller (i.e., a DRAM controller 10) are located before the image/video processing engine 100, and used for buffering a video input S_IN_{3D} in the DRAM 20 and then reading the buffered video input S_IN_{3D} from the DRAM 20 to the image/video processing engine 100 for further processing. In this embodiment, the video input S_IN_{3D} received by the DRAM controller 10 is a line-interleaved video which has odd lines corresponding to one view and even lines corresponding to another view, and no format conversion is performed by the DRAM controller 10. As a result, the DRAM controller 10 directly stores the line-interleaved video into the DRAM 20, and directly reads the line-interleaved video from the DRAM 20. In other words, the video input S_IN_{3D} will be processed by the image/video processing engine 100, where the video input S_IN_{3D} is a merged video, and each merged image of the video input S_IN_{3D} has a plurality of input images (e.g., a left-view image and a right-view image) arranged in a line-interleaved format.

Regarding the image/video processing engine 100, it includes an image/video processing device 102 and a data buffering apparatus 104, where the data buffering apparatus 104 includes a storage controller 112 and a plurality of storage devices 114, 116. By way of example, but not limitation, the storage controller 112 acts as an internal storage controller, and the storage devices 114, 116 act as internal storage devices such as registers or statistic random access memories (SRAMs). The storage capacity of each storage device is smaller than the data size of each input image included in one merged image. Thus, each storage device is arranged for only storing a partial data of one of a plurality of input images merged in a merged image when data of the merged image is received at a data input port D_{IN} of the data buffering apparatus 104. In this embodiment, the merged image includes a left-view image and a right-view image. Therefore, one of the storage devices 114, 116 is dedicated to storing the partial data of the left-view image, and the other of the storage devices 114, 116 is dedicated to storing the partial data of the right-view image. It should be noted that the number of storage devices implemented in the data buffering apparatus 104 is for illustrative purposes only. Actually, the number of storage devices should be equal to the number of input images merged in each merged image. Specifically, in a case where a merged image is composed of N input images, the data buffering apparatus 104 should be configured to have N storage devices.

The storage controller 112 is coupled to the storage devices 114, 116, and arranged for alternately controlling the stored partial data of the input images to be transmitted to the image/video processing device 102 when the data of the merged image is received at the data input port D_{IN}. More specifically, the storage controller 112 receives the video input S_IN_{3D} (e.g., a line-interleaved video) stored in the DRAM 20 via the DRAM controller 10 external to the image/video processing engine 100, and separately stores the left-view video and right-view video contained in the same video input S_IN_{3D} into the storage devices 114 and 116. The image/video processing device 102 retrieves the separate left-view video and right-view video via the storage controller 112. That is, the storage controller 112 reads the partial data of the left-view image from one of the storage devices 114, 116 and then provides the retrieved partial left-view image data to the image/video processing device 102 for further processing (e.g., vertical filtering). Similarly, the storage controller 112 reads the partial data of the right-view image from the other of the storage devices 114, 116 and provides the retrieved partial right-view image data to the image/video processing device 102 for further processing (e.g., vertical filtering). As the storage controller 112 alternately provides the partial left-view image data and the partial right-view image data to the image/video processing device 102, the image/video processing device 102 is capable of processing the separate left-view image data and right-view image data as if in a two-dimensional (2D) format while outputting the line-interleaved video as the video output S_OUT_{3D}. Therefore, no extra DRAM bandwidth is required to convert the line-interleaved video in the 3D format into separate left-view video and right-view video, each being arranged in the 2D format, and then sequentially provide the separate left-view video and right-view video to an image/video processing device. Besides, the video output S_OUT_{3D} outputted from the storage controller 112 directly possesses a 3D format complying with the display format requirement of the display panel (e.g., a pattern-retarder panel) 30. Hence, no extra format conversion is required for processing the video output S_OUT_{3D} before the video output S_OUT_{3D} is transmitted to the display panel 30.

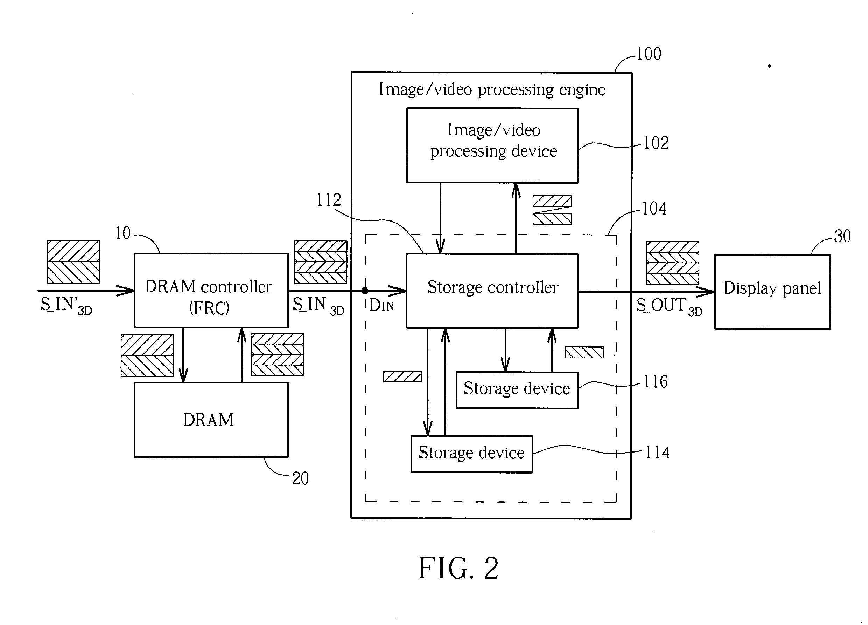

In the embodiment shown in FIG. 1, the video input S_IN_{3D} received by the DRAM controller 10 has the line-interleaved format which satisfies the display format requirement of the display panel 30. Hence, no format conversion is performed upon the video input S_IN_{3D} before the video input S_IN_{3D} is fed into the image/video processing engine 100. However, it is possible that the video input received by the DRAM controller 10 has a 3D format which does not satisfy the display format requirement of the display panel 30. Please refer to FIG. 2, which is a block diagram illustrating the image/video processing engine 100 operated under a second condition according to an embodiment of the present invention. As shown in FIG. 2, the video input S_IN_{3D}' received by the DRAM controller 10 is a merged video with a top-and-bottom format. However, the display panel 30 can only display video in the line-interleaved format. For example, the display panel 30 may be a pattern-retarder display panel. Hence, the DRAM controller 10 would be used to perform the required format conversion upon the video input S_IN_{3D}' to thereby convert the video input S_IN_{3D}' with the top-and-bottom format into the video input S_IN_{3D} with the line-interleaved format. Preferably, the DRAM controller 10 further supports a frame rate conversion (FRC) function, and accomplishes the format conversion while performing the FRC. As the DRAM access of the format conversion is concealed under the DRAM access of the FRC, the format conversion performed by the DRAM controller 10 would not use a large DRAM bandwidth.

In above embodiment, the display panel 30 can only display video in the line-interleaved format. Hence, the image/video processing engine 100 is designed to process the video input S_IN_{3D} with the line-interleaved format. However, the same data buffering concept employed by the image/video processing engine 100 may be applied to an image/video processing engine configured to process a video input with a 3D format different from the line-interleaved format.

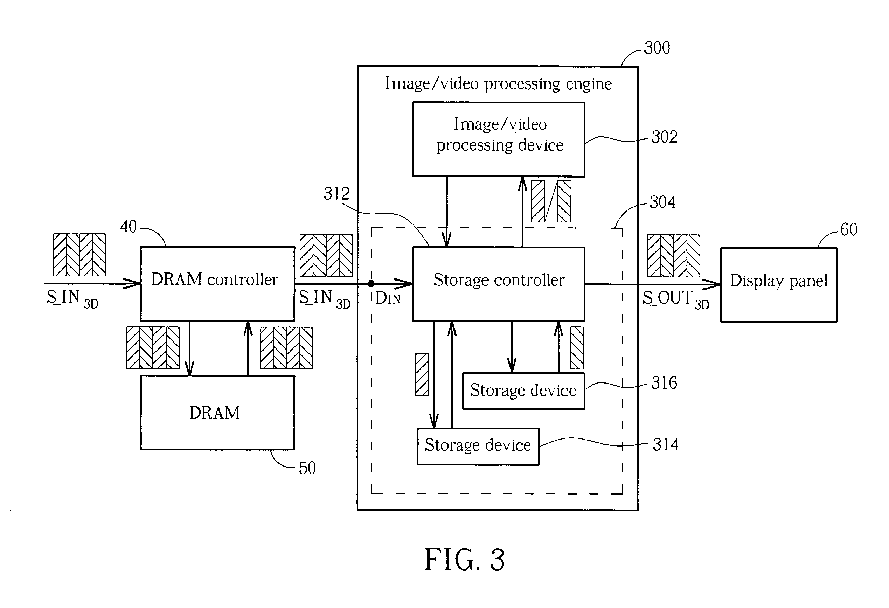

FIG. 3 is a block diagram illustrating another image/video processing engine operated under a first condition according to an embodiment of the present invention. The image/video processing engine 300 may be disposed in a display apparatus such as a 3D television. Hence, the processed video output S_OUT_{3D} generated from the image/video processing engine 300 is transmitted to a display panel 60. In this embodiment, the display panel 60 can only display video in a column-interleaved format. Therefore, the image/video processing engine 300 is arranged to generate a column-interleaved video as the video output S_OUT_{3D}. As shown in FIG. 3, an external memory (i.e., a DRAM 50) and a memory controller (i.e., a DRAM controller 40) are located before the image/video processing engine 300, and used for buffering a video input S_IN_{3D} in the DRAM 50 and then reading the buffered video input S_IN_{3D} from the DRAM 50 to the image/video processing engine 300. In this embodiment, the video input S_IN_{3D} received by the DRAM controller 40 is a column-interleaved video which has odd columns corresponding to one view and even columns corresponding to another view, and no format conversion is performed by the DRAM controller 40. As a result, the DRAM controller 40 directly stores the column-interleaved video into the DRAM 50, and directly reads the line-interleaved video from the DRAM 50. In other words, the video input S_IN_{3D} will be processed by the image/video processing engine 300, where the video input S_IN_{3D} is a merged video, and each merged image of the video input S_IN_{3D} has a plurality of input images (e.g., a left-view image and a right-view image) arranged in a column-interleaved format.

Similar to the image/video processing engine 100 shown in FIG. 1, the image/video processing engine 300 includes an image/video processing device 302 and a data buffering apparatus 304, where the data buffering apparatus 304 includes a storage controller 312 and a plurality of storage devices 314, 316. By way of example, but not limitation, the storage controller 312 acts as an internal storage controller, and the storage devices 314, 316 act as internal storage devices such as registers or SRAMs. The storage capacity of each storage device is smaller than the data size of each input image included in one merged image. Thus, each storage device is arranged for only storing a partial data of one of a plurality of input images merged in a merged image when data of the merged image is received at a data input port D_{IN} of the data buffering apparatus 304. In this embodiment, the merged image includes a left-view image and a right-view image. Therefore, one of the storage devices 314, 316 is dedicated to storing the partial data of the left-view image, and the other of the storage devices 314, 316 is dedicated to storing the partial data of the right-view image. It should be noted that the number of storage devices should be equal to the number of input images merged in each merged image. Specifically, in a case where a merged image is composed of N input images, the data buffering apparatus 304 should be configured to have N storage devices.

The storage controller 312 is coupled to the storage devices 314, 316, and arranged for alternately controlling the stored partial data of the input images to be transmitted to the image/video processing device 302 when the data of the merged image is received at the data input port D_{IN}. More specifically, the storage controller 312 receives the video input S_IN_{3D} (e.g., a column-interleaved video) stored in the DRAM 50 via the DRAM controller 40, and separately stores the left-view video and right-view video contained in the same video input S_IN_{3D} into the storage devices 314 and 316. The image/video processing device 302 retrieves the separate left-view video and right-view video via the storage controller 312. That is, the storage controller 312 reads the partial data of the left-view image from one of the storage devices 314, 316 and provides the retrieved partial left-view image data to the image/video processing device 302 for further processing (e.g., horizontal filtering). Similarly, the storage controller 312 reads the partial data of the right-view image from the other of the storage devices 314, 316 and provides the retrieved partial right-view image data to the image/video processing device 302 for further processing (e.g., horizontal filtering). As the storage controller 312 alternately provides the partial left-view image data and the partial right-view image data to the image/video processing device 302, the image/video processing device 302 is capable of processing the separate left-view image data and right-view image data as if in a 2D format while outputting the column-interleaved video as the video output S_OUT_{3D}. Therefore, no extra DRAM bandwidth is required to convert the column-interleaved video in the 3D format into separate left-view video and right-view video, each being arranged in the 2D format, and then sequentially provide the separate left-view video and right-view video to an image/video processing device. Besides, the video output S_OUT_{3D} outputted from the storage controller 312 directly possesses a 3D format complying with the display format requirement of the display panel 60. Hence, no extra format conversion is required for processing the video output S_OUT_{3D} before the video output S_OUT_{3D} is transmitted to the display panel 60.

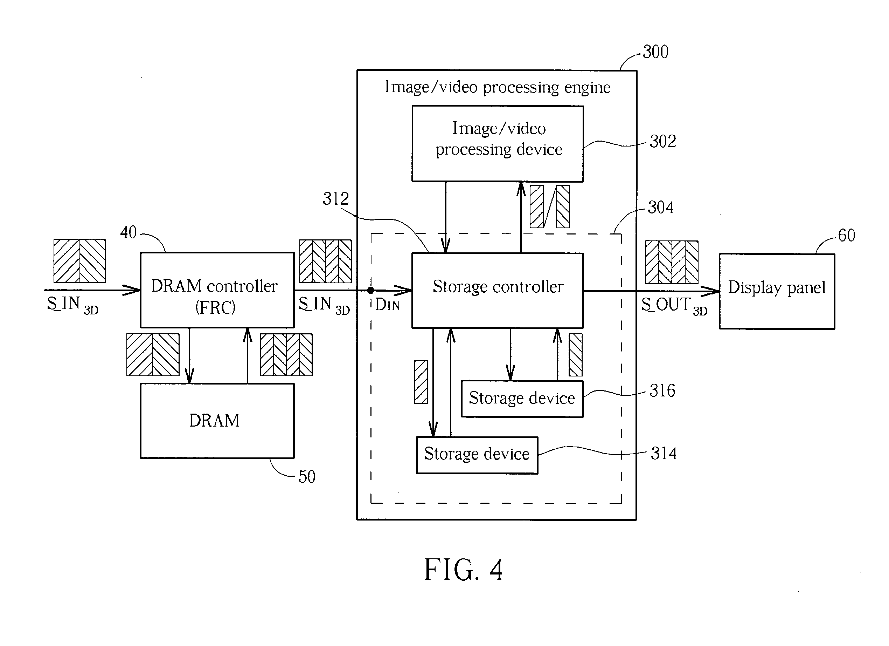

In the embodiment shown in FIG. 3, the video input S_IN_{3D} received by the DRAM controller 40 has the column-interleaved format which satisfies the display format requirement of the display panel 60. Hence, no format conversion is performed upon the video input S_IN_{3D} before the video input S_IN_{3D} is fed into the image/video processing engine 300. However, it is possible that the video input received by the DRAM controller 40 has a 3D format which does not satisfy the display format requirement of the display panel 60. Please refer to FIG. 4, which is a block diagram illustrating the image/video processing engine 300 operated under a second condition according to an embodiment of the present invention. As shown in FIG. 4, the video input S_IN_{3D}' received by the DRAM controller 40 is a merged video with a side-by-side format. However, the display panel 30 can only display video in the column-interleaved format. Hence, the DRAM controller 40 would be used to perform the required format conversion upon the video input S_IN_{3D}' to thereby convert the video input S_IN_{3D}' with the side-by-side format into the video input S_IN_{3D} with the column-interleaved format. Preferably, the DRAM controller 40 further supports an FRC function, and accomplishes the format conversion while performing the FRC. Hence, as the DRAM access of the format conversion is concealed under the DRAM access of the FRC, the format conversion performed by the DRAM controller 40 would not use a large DRAM bandwidth.

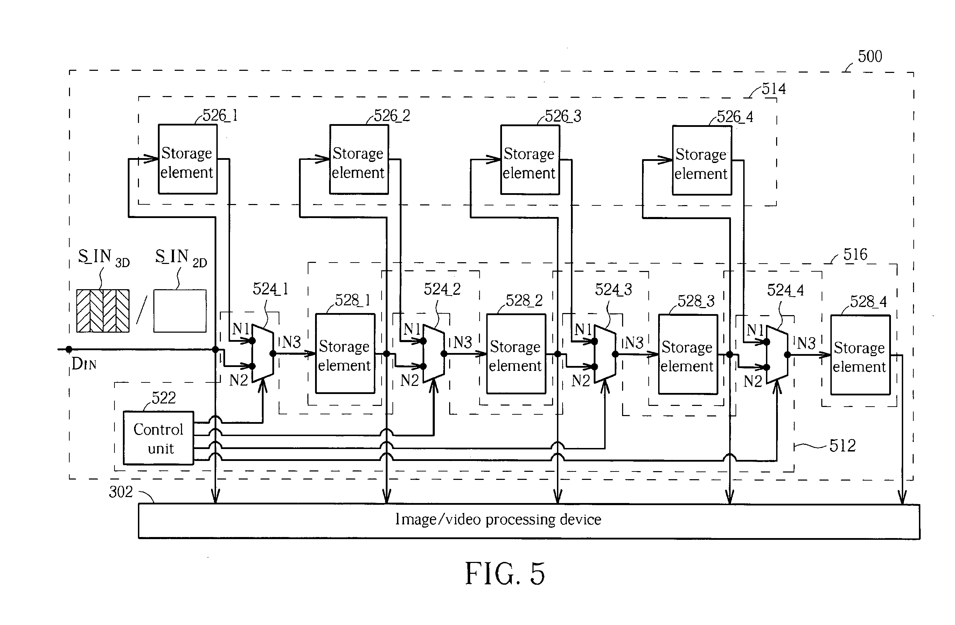

In the following, several exemplary implementations of the data buffering apparatuses 104 and 304 are provided for better understanding of technical features of the present invention. FIG. 5 is a diagram illustrating a first exemplary implementation of the data buffering apparatus 304 shown in FIG. 3/FIG. 4. The data buffering apparatus 304 shown in FIG. 3/FIG. 4 may be realized using the data buffering apparatus 500 shown in FIG. 5. The data buffering apparatus 500 includes a storage controller 512 and a plurality of storage devices (e.g., a first storage device 514 and a second storage device 516). The storage controller 512 includes a control unit 522 and a plurality of multiplexers (MUXes) 524_1, 524_2, 524_3, 524_4. The first storage device 514 includes a plurality of first storage elements (e.g., shift registers) 526_1, 526_2, 526_3, 526_4. The second storage device 516 includes a plurality of second storage elements (e.g., shift registers) 528_1, 528_2, 528_3, 528_4. It should be noted that the number of the first storage elements, the number of the second storage elements and the number of the multiplexers are for illustrative purposes only. Actually, the number of the first storage elements, the number of the second storage elements and the number of the multiplexers depend on the operation performed by the image/video processing device 302. In this embodiment, the image/video processing device 302 is a filter arranged to perform a 5-tap horizontal filtering operation. Hence, the first storage device 514 has four storage elements, the second storage device 516 has four storage elements, and the storage controller 512 has four multiplexers. In another embodiment, the first storage device 514 may have (N-1) storage elements, the second storage device 516 may have (N-1) storage elements, and the storage controller 512 may have (N-1) multiplexers when the image/video processing device 302 is arranged to perform an N-tap horizontal filtering operation. Besides, the number of storage devices depends on the number of input images merged in one merged image. For example, when the merged image has M input images corresponding to M views respectively, there are M storage devices implemented in the data buffering apparatus, and each multiplexer is realized by an M-to-1 multiplexer.

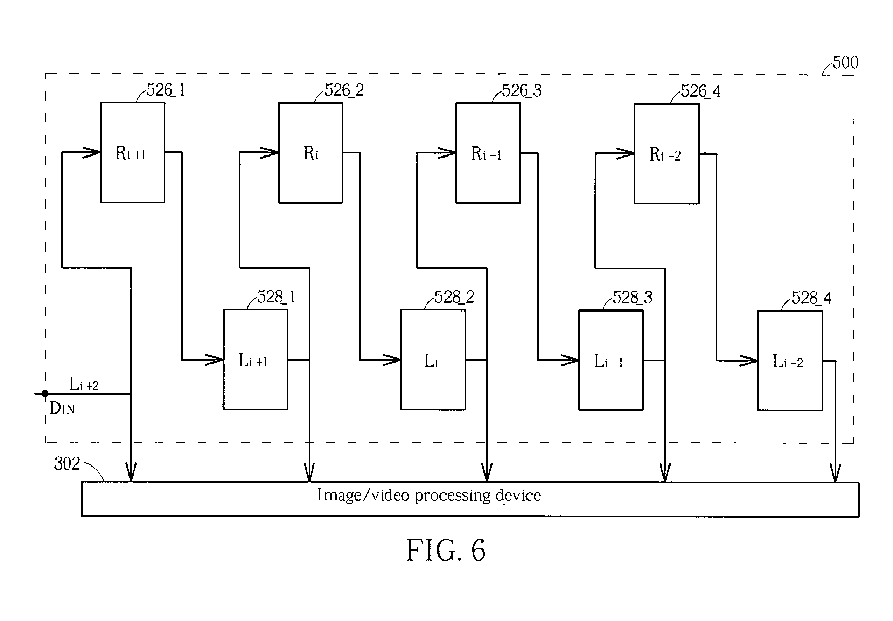

The control unit 522 is arranged to control the internal interconnection of each of the multiplexers 524_1-524_4. Each of the multiplexers 524_1-524_4 has a first input node N 1 , a second input node N2 and an output node N3. When video input at the data input port D_{IN} is a merged video S_IN_{3D} with a column-interlaced format, the control unit 522 controls each of the multiplexers 524_1-524_4 to have its output node N3 coupled to its first input node N1. Specifically, when the data of one merged image is sequentially fed into the data input port D_{IN}, the storage controller 512 is arranged for making the first storage elements 526_1-526_4 and the second storage elements 528_1-528_4 cascaded in an interleaved manner such that each first storage element is followed by one second storage element, and transmitting data read from the second storage elements 528_1-528_4 to the image/video processing device 302, where the data input port D_{IN} is coupled to the leading first storage element 526_1. Please refer to FIG. 6, which is a diagram illustrating an equivalent circuit of the data buffering apparatus 500 shown in FIG. 5 when a merged video composed of merged images is received. The image/video processing device 302 is arranged to perform a 5-tap horizontal filtering operation upon the column-interleaved video. In this case, to process i^{th} pixel of the left-view image, a pixel window is required to be centered at the i^{th} pixel Lᵢ. The pixels Lᵢ₋₂, Rᵢ₋₂, Lᵢ₋₁, Rᵢ₋₁, Lᵢ, Rᵢ, Lᵢ₊₁, Rᵢ₊₁, Lᵢ₊₂ located at the same row of the merged image with the left-view image and the right-view image arranged in the column-interleaved format are sequentially fed into the data input port D_{IN}. When the (i+2)^{th} pixel of the left-view image is available at the data input port D_{IN}, the first storage elements 526_1-526_4 would store pixels Rᵢ₊₁-Rᵢ₋₂, respectively; and the second storage elements 528_1-528_4 would store pixels Lᵢ₊₁-Lᵢ₋₂, respectively. As the pixels Lᵢ₊₂-Lᵢ₋₂ are concurrently transmitted to the image/video processing device 302, the 5-tap horizontal filtering operation for the center pixel Lᵢ is performed by the image/video processing device 302.

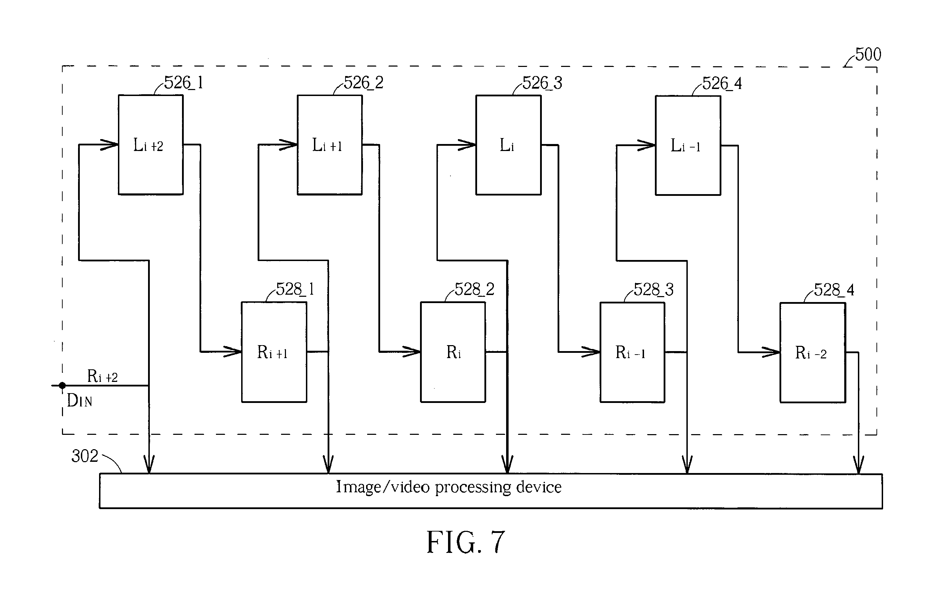

Please refer to FIG. 7, which is a diagram illustrating another equivalent circuit of the data buffering apparatus 500 shown in FIG. 5 when a merged video composed of merged images is received. As mentioned above, the first storage elements 526_1-526_4 and the second storage elements 528_1-528_4 are cascaded in an interleaved manner. When the next pixel Rᵢ₊₂ is fed into the data input port D_{IN}, the first storage elements 526_1-526_4 would store pixels Li₊₂-Lᵢ₋₁, respectively; and the second storage elements 528_1-528_4 would store pixels Rᵢ₊₁-Rᵢ₋₂, respectively. Hence, the pixels Rᵢ₊₂-Rᵢ₋₂ are concurrently transmitted to the image/video processing device 302, and the 5-tap horizontal filtering operation for the center pixel Rᵢ is performed by the image/video processing device 302.

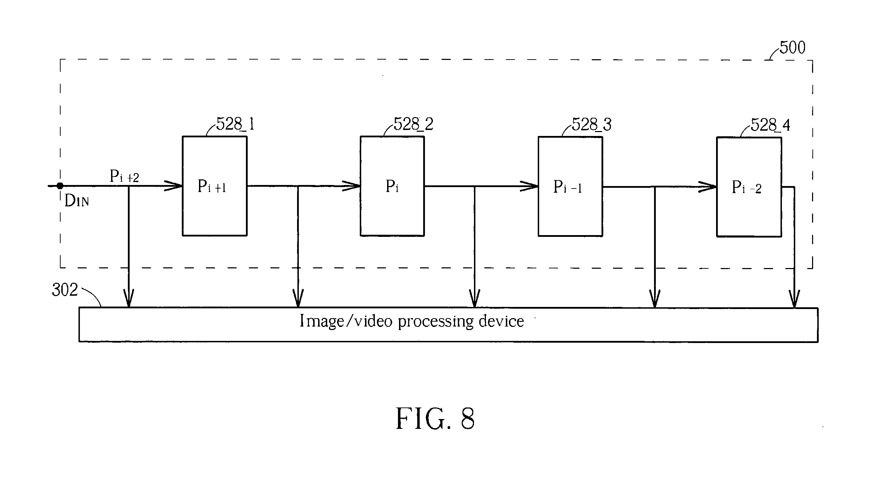

When video input at the data input port D_{IN} is a single video (i.e., a 2D video) S_IN_{2D} composed of a plurality of non-merged images corresponding to a single view, the control unit 522 controls each of the multiplexers 524_1-524_4 to have its output node N3 coupled to its second input node N2. Specifically, when data of the non-merged image is sequentially fed into the data input port D_{IN}, the storage controller 512 is arranged for disconnecting the first storage elements 526_1-526_4 from the second storage elements 528_1-528_4, making the second storage elements 528_1-528_4 cascaded, and transmitting data read from the second storage elements 528_1-528_4 to the image/video processing device 302, where the data input port D_{IN} is coupled to the leading second storage element 528_1. Please refer to FIG. 8, which is a diagram illustrating an equivalent circuit of the data buffering apparatus 500 shown in FIG. 5 when a single video composed of non-merged images is received. In this case, to process i^{th} pixel Pᵢ of the single 2D image, a pixel window is required to be centered at the i^{th} pixel Pᵢ. The pixels Pᵢ₋₂, Pᵢ₋₁, Pᵢ, Pᵢ₊₁, Pᵢ₊₂ located at the same row of the single 2D image are sequentially fed into the data input port D_{IN}. As can be seen from FIG. 8, when the (i+2)^{th} pixel Pᵢ₊₂ is available at the data input port D_{IN}, the second storage elements 528_1-528_4 would store pixels Pᵢ₊₁-Pᵢ₋₂, respectively. As the pixels Pᵢ₊₂-Pᵢ₋₂ are concurrently transmitted to the image/video processing device 302, the 5-tap horizontal filtering operation for the center pixel Pᵢ is performed by the image/video processing device 302.

Regarding the exemplary data buffering apparatus 500 shown in FIG. 5, when a merged image of a merged video (i.e., a 3D video) is to be processed by the image/video processing device 302, the first storage elements 526_1-526_4 and the second storage elements 528_1-528_4 are all active for data buffering, and only the data stored in the second storage elements 528_1-528_4 is transmitted to the image/video processing device 302; and when a non-merged image of a single video (i.e., a 2D video) is to be processed by the image/video processing device 302, only the second storage elements 528_1-528_4 are active for data buffering, and only the data stored in the second storage elements 528_1-528_4 is transmitted to the image/video processing device 302. To put it another way, regarding the exemplary data buffering apparatus 500 shown in FIG. 5, the number of storage elements used for buffering data of the merged image is greater than the number of storage elements used for buffering data of the non-merged image, and the image/video processing device 302 employs filters with the same tap number to process the merged image and the non-merged image. In one alternative design, the requirement of the storage elements may be reduced for lowering the production cost. For example, the image/video processing device 302 may be modified to employ a filter with a smaller tap number, thus requiring fewer first storage elements and second storage elements. However, the video processing capability of the image/video processing device 302 is reduced. In another alternative design, the requirement of the storage elements may be increased for enhancing the video processing capability of the image/video processing device 302. For example, the image/video processing device 302 may be modified to employ a filter with a larger tap number. However, as more first storage elements and second storage elements are required, the production cost is increased. To put it simply, the number of storage elements implemented in the data buffering apparatus 500 can be adjusted, depending upon actual design requirement/consideration.

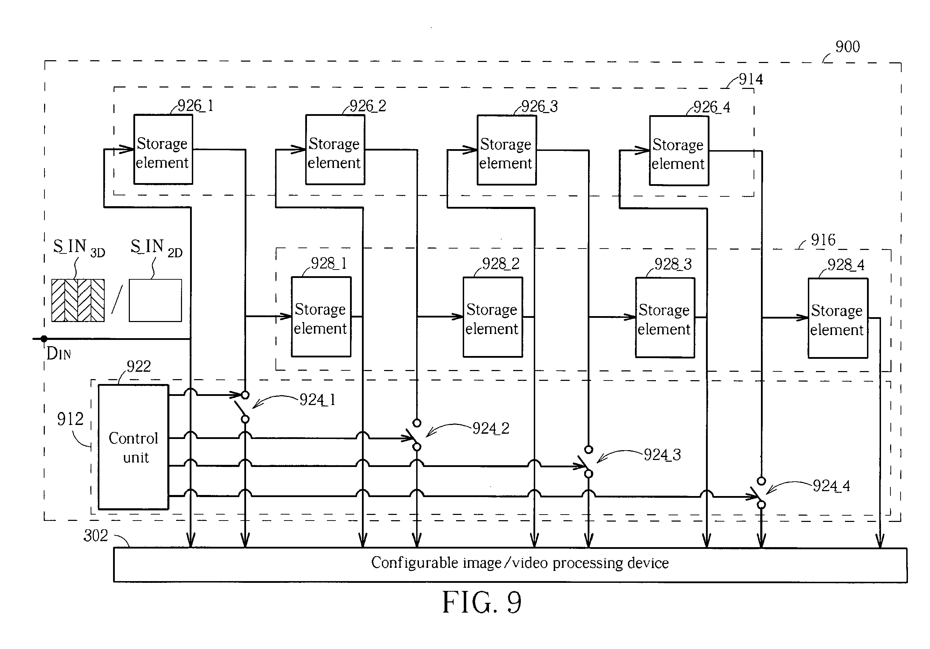

Please note that the architecture shown in FIG. 5 is merely one implementation of the data buffering apparatus. In another embodiment, the number of storage elements used for buffering data of a merged image may be equal to the number of storage elements used for buffering data of a non-merged image, and the image/video processing device 302 may employ filters with different tap numbers to process the merged image and the non-merged image. FIG. 9 is a diagram illustrating a second exemplary implementation of the data buffering apparatus 304 shown in FIG. 3/FIG. 4. The data buffering apparatus 304 shown in FIG. 3/FIG. 4 may be realized using the data buffering apparatus 900 shown in FIG. 9. The data buffering apparatus 900 includes a storage controller 912 and a plurality of storage devices (e.g., a first storage device 914 and a second storage device 916). The storage controller 912 includes a control unit 922 and a plurality of switches 924_1, 924_2, 924_3, 924_4. The first storage device 914 includes a plurality of first storage elements (e.g., shift registers) 926_1, 926_2, 926_3, 926_4. The second storage device 916 includes a plurality of second storage elements (e.g., shift registers) 928_1, 928_2, 928_3,928_4. Besides, the first storage elements 926_1-926_4 and the second storage elements 928_1-928_4 are cascaded in an interleaved manner such that each first storage element is followed by one second storage element, where the data input port D_{IN} is coupled to the leading first storage element 926_1. It should be noted that the number of the first storage elements, the number of the second storage elements and the number of the switches are for illustrative purposes only. Actually, the number of the first storage elements, the number of the second storage elements and the number of the switches depend on the operation performed by the image/video processing device 302. In this embodiment, the image/video processing device 302 is a configurable filter arranged to perform a 5-tap horizontal filtering operation for a merged video (i.e., a 3D video), and perform a 9-tap horizontal filtering operation for a single video (i.e., a 2D video). Hence, the first storage device 514 has four storage elements, the second storage device 516 has four storage elements, and the storage controller 512 has four switches. In another embodiment, the first storage device 514 may have (N-1) storage elements, the second storage device 516 may have (N-1) storage elements, and the storage controller 512 may have (N-1) switches when the image/video processing device 302 is arranged to perform a N-tap horizontal filtering operation upon the merged video and perform an M-tap horizontal filtering operation upon the single video, where M=[(N-1)*2]+1. Besides, the number of storage devices depends on the number of input images merged in one merged image.

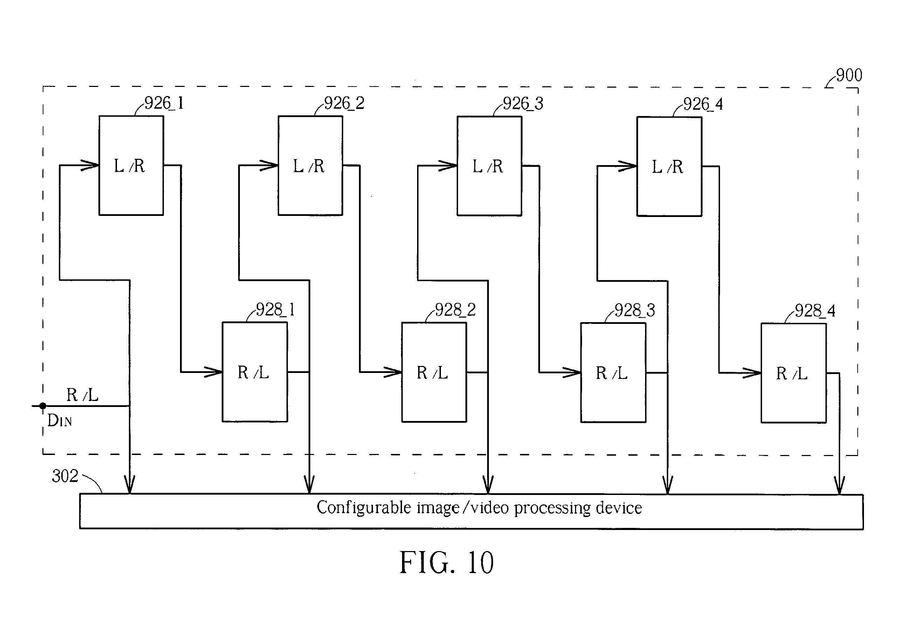

The control unit 922 is arranged to control the on/off status of each of the switches 924_1-924_4. When video input at the data input port D_{IN} is a merged video S_IN_{3D} with a column-interlaced format, the control unit 922 controls each of the switches 924_1-924_4 to be switched off for disconnecting the first storage elements 926_1-926_4 from the image/video processing device 302. Specifically, when the data of the merged image is sequentially fed into the data input port D_{IN}, the storage controller 912 is arranged for only transmitting data read from the second storage elements 928_1-928_4 to the image/video processing device 302. Please refer to FIG. 10, which is a diagram illustrating an equivalent circuit of the data buffering apparatus 900 shown in FIG. 9 when a merged video composed of merged images is received. The image/video processing device 302 is arranged to perform a 5-tap horizontal filtering operation upon the column-interleaved video. Therefore, when the (i+2)^{th} pixel Lᵢ₊₂ of the left-view image is available at the data input port D_{IN}, the first storage elements 526_1-526_4 would store pixels Rᵢ₊₁-Rᵢ₋₂, respectively; and the second storage elements 528_1-528_4 would store pixels Lᵢ₊₁-Lᵢ₋₂, respectively. As the pixels Lᵢ₊₂-Lᵢ₋₂ are concurrently transmitted to the image/video processing device 302, the 5-tap horizontal filtering operation for the center pixel Lᵢ is performed by the image/video processing device 302. Similarly, when the next pixel Rᵢ₊₂ is fed into the data input port D_{IN}, the first storage elements 526_1-526_4 would store pixels Lᵢ₊₂-Lᵢ₋₁, respectively; and the second storage elements 528_1-528_4 would store pixels Rᵢ₊₁-Rᵢ₋₂, respectively. Hence, the pixels Rᵢ₊₂-Rᵢ₋₂ are concurrently transmitted to the image/video processing device 302, and the 5-tap horizontal filtering operation for the center pixel Rᵢ is performed by the image/video processing device 302. As a person skilled in the art can readily understand operation of the data buffering apparatus 900 shown in FIG. 10 after reading above paragraphs directed to the data buffering apparatus 500 shown in FIG. 6 and FIG. 7, further description is omitted here for brevity.

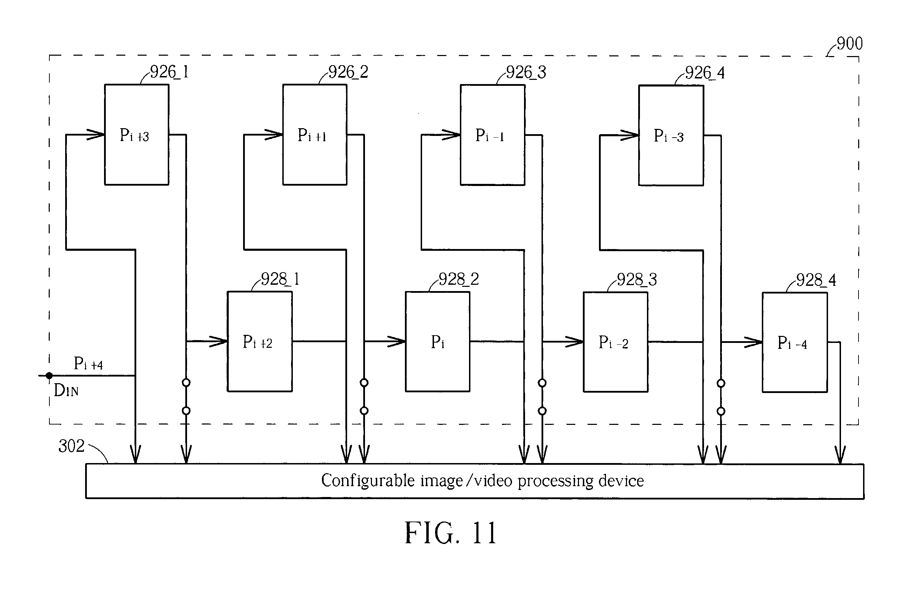

When video input at the data input port D_{IN} is a single video (i.e., a 2D video) S_IN_{2D} composed of a plurality of non-merged images corresponding to a single view, the control unit 522 controls each of the switches 924_1-924_4 to be switched on for connecting the first storage elements 926_1-926_4 to the image/video processing device 302. Specifically, when data of the non-merged image is sequentially fed into the data input port D_{IN}, the storage controller 912 is arranged for transmitting data read from all of the first storage elements 926_1-926_4 and all of the second storage elements 928_1-928_4 to the image/video processing device 302. Please refer to FIG. 11, which is a diagram illustrating an equivalent circuit of the data buffering apparatus 900 shown in FIG. 9 when a single video composed of non-merged images is received. In this case, to process i^{th} pixel Pᵢ of the single 2D image, a pixel window is required to be centered at the i^{th} pixel Pᵢ. The pixels Pᵢ-₄, Pᵢ₋₃, Pᵢ₋₂, Pᵢ₋₁, Pᵢ, Pᵢ₊₁, Pᵢ₊₂, Pᵢ₊₃, Pᵢ₊₄ located at the same row of the single 2D image are sequentially fed into the data input port D_{IN}. As can be seen from FIG. 11, when the (i+4)^{th} pixel P_{I+4} is available at the data input port D_{IN}, the first storage elements 926_1-926_4 would store pixels Pᵢ₊₃, Pᵢ₊₁, Pᵢ₋₁, Pᵢ₋₃, respectively, and the second storage elements 928_1-928_4 would store pixels Pᵢ₊₂, Pᵢ, Pᵢ₋₂, Pᵢ₋₄, respectively. As the pixels Pᵢ₊₄-Pᵢ₋₄ are concurrently transmitted to the image/video processing device 302, the 9-tap horizontal filtering operation for the center pixel Pᵢ is performed by the image/video processing device 302.

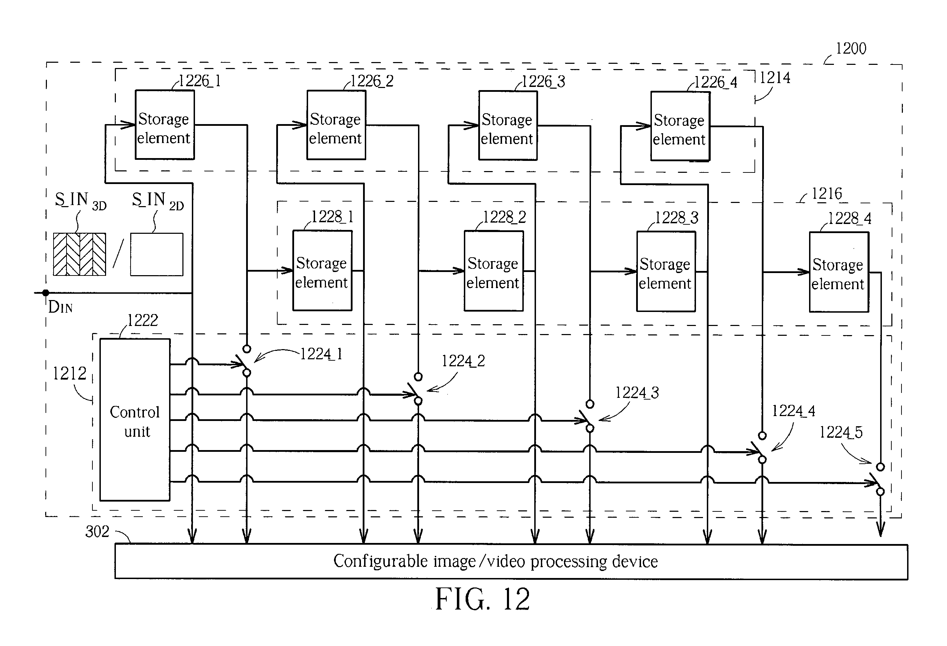

In yet another embodiment, the number of storage elements used for buffering data of a merged image may be different from the number of storage elements used for buffering data of a non-merged image, and the image/video processing device 302 may employ filters with different tap numbers to process the merged image and the non-merged image. FIG. 12 is a diagram illustrating a third exemplary implementation of the data buffering apparatus 304 shown in FIG. 3/FIG. 4. The data buffering apparatus 304 shown in FIG. 3/FIG. 4 may be realized using the data buffering apparatus 1200 shown in FIG. 12. The data buffering apparatus 1200 includes a storage controller 1212 and a plurality of storage devices (e.g., a first storage device 1214 and a second storage device 1216). The storage controller 1212 includes a control unit 1222 and a plurality of switches 1224_1 , 1224_2, 1224_3, 1224_4, 1224_5. The first storage device 1214 includes a plurality of first storage elements (e.g., shift registers) 1226_1, 1226_2, 1226_3, 1226_4. The second storage device 1216 includes a plurality of second storage elements (e.g., shift registers) 1228_1, 1228_2, 1228_3, 1228_4. Besides, the first storage elements 1226_1-1226_4 and the second storage elements 1228_1-1228_4 are cascaded in an interleaved manner such that each first storage element is followed by one second storage element, where the data input port D_{IN} is coupled to the leading first storage element 1226_1. It should be noted that the number of the first storage elements, the number of the second storage elements and the number of the switches are for illustrative purposes only. Actually, the number of the first storage elements, the number of the second storage elements and the number of the switches depend on the operation performed by the image/video processing device 302. In this embodiment, the image/video processing device 302 is a configurable filter arranged to perform a 5-tap horizontal filtering operation for a merged video (i.e., a 3D video), and perform a 7-tap horizontal filtering operation for a single video (i.e., a 2D video). Hence, the first storage device 514 has four storage elements, the second storage device 516 has four storage elements, and the storage controller 512 has five switches. In another embodiment, the first storage device 514 may have (N-1) storage elements, the second storage device 516 may have (N-1) storage elements, and the storage controller 512 may have (N-1)+[2*(N-1)+1-M]/2 switches when the image/video processing device 302 is arranged to perform an N-tap horizontal filtering operation upon the merged video and perform an M-tap horizontal filtering operation upon the single video, where M<2*(N-1)+1. Besides, the number of storage devices depends on the number of input images merged in one merged image.

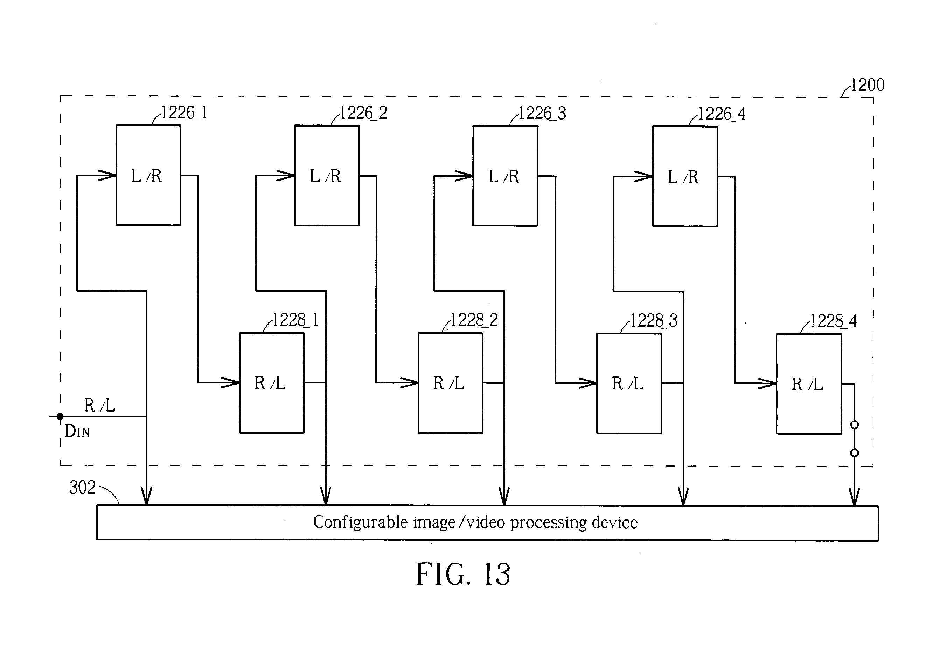

The control unit 1222 is arranged to control the on/off status of each of the switches 1224_1-1224_5. When video input at the data input port D_{IN} is a merged video S_IN_{3D} with a column-interlaced format, the control unit 1222 controls the switch 1224_5 to be switched on for connecting the second storage element 1228_4 to the image/video processing device 302, and controls each of the switches 1224_1-1224_4 to be switched off for disconnecting the first storage elements 1226_1-1226_4 from the image/video processing device 302. Specifically, when the data of the merged image is sequentially fed into the data input port D_{IN}, the storage controller 1212 is arranged for only transmitting data read from the second storage elements 1228_1-1228_4 to the image/video processing device 302. Please refer to FIG. 13, which is a diagram illustrating an equivalent circuit of the data buffering apparatus 1200 shown in FIG. 12 when a merged video composed of merged images is received. The image/video processing device 302 is arranged to perform a 5-tap horizontal filtering operation upon the column-interleaved video. Therefore, when the (i+2)^{th} pixel Lᵢ₊₂ of the left-view image is available at the data input port D_{IN}, the first storage elements 1226_1-1226_4 would store pixels Rᵢ₊₁-Rᵢ₋₂, respectively; and the second storage elements 1228_1-1228_4 would store pixels Lᵢ₊₁-Lᵢ₋₂, respectively. As the pixels Lᵢ₊₂-Lᵢ₋₂ are concurrently transmitted to the image/video processing device 302, the 5-tap horizontal filtering operation for the center pixel Lᵢ is performed by the image/video processing device 302. Similarly, when the next pixel Rᵢ₊₂ is fed into the data input port D_{IN}, the first storage elements 1226_1-1226_4 would store pixels Lᵢ₊₂-Lᵢ₋₁, respectively; and the second storage elements 1228_1-1228_4 would store pixels Rᵢ₊₁-Rᵢ₋₂, respectively. Hence, the pixels Rᵢ₊₂-Rᵢ₋₂ are concurrently transmitted to the image/video processing device 302, and the 5-tap horizontal filtering operation for the center pixel Rᵢ is performed by the image/video processing device 302. As a person skilled in the art can readily understand operation of the data buffering apparatus 1200 shown in FIG. 13 after reading above paragraphs directed to the data buffering apparatus 500 shown in FIG. 6 and FIG. 7, further description is omitted here for brevity.

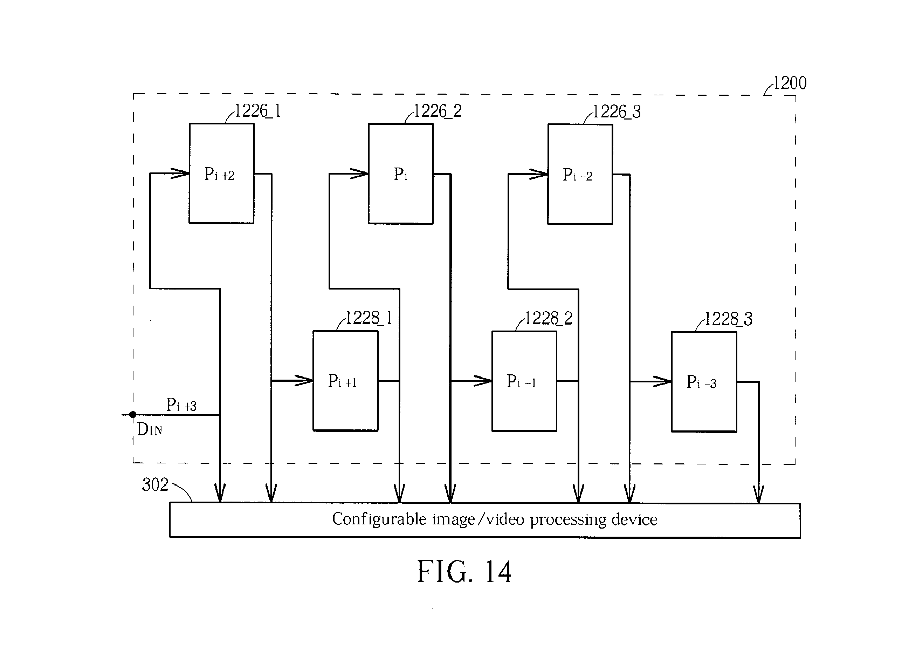

When video input at the data input port D_{IN} is a single video (i.e., a 2D video) S_IN_{2D} composed of a plurality of non-merged images corresponding to a single view, the control unit 1222 controls each of the switches 1224_1-1224_3 to be switched on for connecting the first storage elements 1226_1-1226_3 to the image/video processing device 302, and further controls each of the switches 1224_4-1224_5 to be switched off for disconnecting the first storage element 1226_4 and the second storage element 1228_4 from the image/video processing device 302. Specifically, when data of the non-merged image is sequentially fed into the data input port D_{IN}, the storage controller 1212 is arranged for transmitting data read from part of the first storage elements 1226_1-1226_4 and part of the second storage elements 1228_1-1228_4 to the image/video processing device 302. Please refer to FIG. 14, which is a diagram illustrating an equivalent circuit of the data buffering apparatus 1200 shown in FIG. 12 when a single video composed of non-merged images is received. In this case, to process i^{th} pixel Pᵢ of the single 2D image, a pixel window is required to be centered at the i^{th} pixel Pᵢ. The pixels Pᵢ₋₃, Pᵢ₋₂, Pᵢ₋₁, Pᵢ, Pᵢ₊₁, Pᵢ₊₂, Pᵢ₊₃ located at the same row of the single 2D image are sequentially fed into the data input port D_{IN}. As can be seen from FIG. 14, when the (i+3)^{th} pixel P_{I+3} is available at the data input port D_{IN}, the first storage elements 1226_1-1226_3 would store pixels Pᵢ₊₂, Pᵢ, Pᵢ₋₂, respectively, and the second storage elements 1228_1-1228_3 would store pixels Pᵢ₊₁, Pᵢ₋₁, Pᵢ₋₃, respectively. As the pixels Pᵢ₊₃-Pᵢ₋₃ are concurrently transmitted to the image/video processing device 302, the 7-tap horizontal filtering operation for the center pixel Pᵢ is performed by the image/video processing device 302.

Each of the aforementioned exemplary data buffering apparatuses 500, 900, 1200 is used to realize the data buffering apparatus 304 shown in FIG. 3/FIG. 4, where the video input is either a column-interleaved 3D video or a 2D video. With proper modification made to data buffering apparatuses 500, 900, 1200 for replacing the shift registers with line buffers, each of the modified data buffering apparatuses may be used to realize the data buffering apparatus 104 shown in FIG. 1 /FIG. 2.

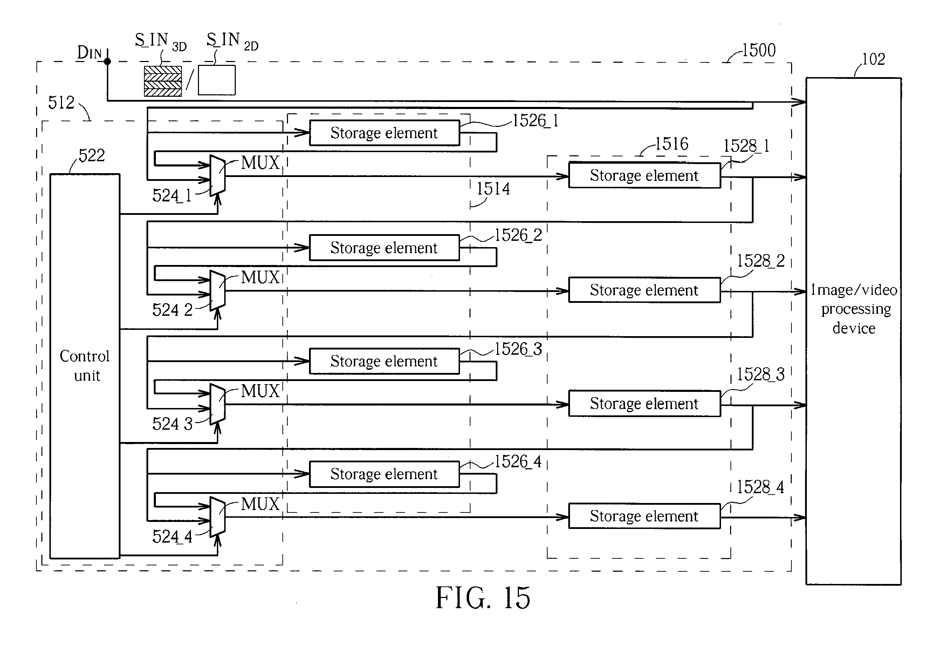

FIG. 1 5 is a diagram illustrating a first exemplary implementation of the data buffering apparatus 104 shown in FIG. 1/FIG. 2. The data buffering apparatus 104 shown in FIG. 1/FIG. 2 may be realized using the data buffering apparatus 1500 shown in FIG. 15. The data buffering apparatus 1500 includes the aforementioned storage controller 512 and a plurality of storage devices (e.g., a first storage device 1 514 and a second storage device 1 516). The first storage device 1 514 includes a plurality of first storage elements (e.g., line buffers) 1526_1, 1526_2, 1526_3,1526_4. The second storage device 1516 includes a plurality of second storage elements (e.g., line buffers) 1528_1, 1528_2, 1528_3, 1528_4. When the data of one merged image is sequentially fed into the data input port D_{IN} (i.e., a merged video/3D video S_IN_{3D} with a line-interleaved format is received at the data input port D_{IN}), the storage controller 512 is arranged for making the first storage elements 1526_1-1526_4 and the second storage elements 1528_1-1528_4 cascaded in an interleaved manner such that each first storage element is followed by one second storage element, and transmitting data read from the second storage elements 1528_1-1528_4 to the image/video processing device 102, where the data input port D_{IN} is coupled to the leading first storage element 1526_1. When data of the non-merged image is sequentially fed into the data input port D_{IN} (i.e., a single video/2D video S_IN_{2D} is received at the data input port D_{IN}), the storage controller 512 is arranged for disconnecting the first storage elements 1526_1-1526_4 from the second storage elements 1528_1-1528_4, making the second storage elements 1528_1-1528_4 cascaded, and transmitting data read from the second storage elements 1528_1-1528_4 to the image/video processing device 102, where the data input port D_{IN} is coupled to the leading second storage element 1528_1. As a person skilled in the art can readily understand details of the data buffering apparatus 1 500 after reading above paragraphs directed to the data buffering apparatus 500, further description is omitted here for brevity.

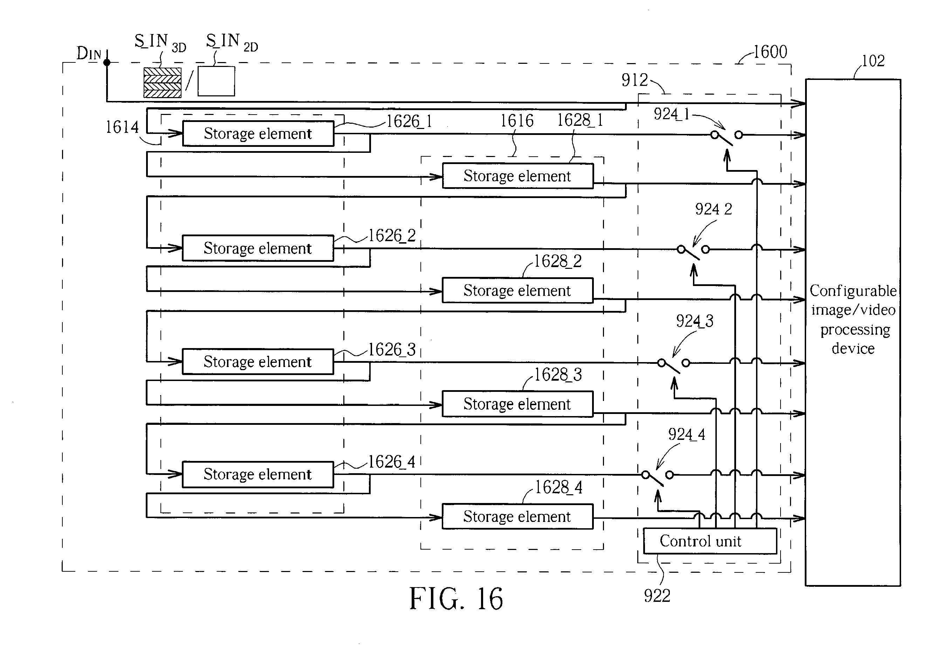

FIG. 16 is a diagram illustrating a second exemplary implementation of the data buffering apparatus 104 shown in FIG. 1/FIG. 2. The data buffering apparatus 104 shown in FIG. 1/FIG. 2 may be realized using the data buffering apparatus 1600 shown in FIG. 16. The data buffering apparatus 1600 includes the aforementioned storage controller 912 and a plurality of storage devices (e.g., a first storage device 1614 and a second storage device 1616). The first storage device 1614 includes a plurality of first storage elements (e.g., line buffers) 1626_1, 1626_2, 1626_3, 1626_4. The second storage device 1616 includes a plurality of second storage elements (e.g., line buffers) 1628_1, 1628_2, 1628_3, 1628_4. Besides, the first storage elements 1626_1-1626_4 and the second storage elements 1628_1-1628_4 are cascaded in an interleaved manner such that each first storage element is followed by one second storage element, where the data input port D_{IN} is coupled to the leading first storage element 1626_1. When the data of the merged image is sequentially fed into the data input port D_{IN} (i.e., a merged video/3D video S_IN_{3D} with the line-interleaved format is received at the data input port D_{IN}), the storage controller 912 is arranged for only transmitting data read from the second storage elements 1628_1-1628_4 to the image/video processing device 102. When data of the non-merged image is sequentially fed into the data input port D_{IN}, the storage controller 912 is arranged for transmitting data read from all of the first storage elements 1626_1-1626_4 and all of the second storage elements 1628_1-1628_4 to the image/video processing device 102. As a person skilled in the art can readily understand details of the data buffering apparatus 1600 after reading above paragraphs directed to the data buffering apparatus 900, further description is omitted here for brevity.

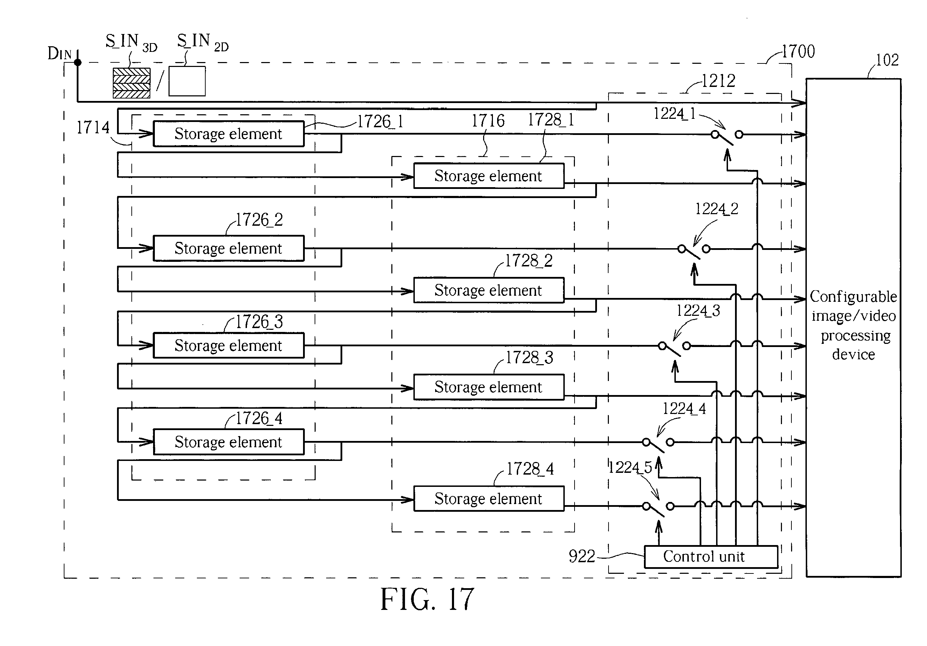

FIG. 17 is a diagram illustrating a third exemplary implementation of the data buffering apparatus 104 shown in FIG. 1/FIG. 2. The data buffering apparatus 104 shown in FIG. 1/FIG. 2 may be realized using the data buffering apparatus 1700 shown in FIG. 17. The data buffering apparatus 1700 includes the aforementioned storage controller 1212 and a plurality of storage devices (e.g., a first storage device 1714 and a second storage device 1716). The first storage device 1714 includes a plurality of first storage elements (e.g., line buffers) 1726_1, 1726_2, 1726_3,1726_4. The second storage device 1716 includes a plurality of second storage elements (e.g., line buffers) 1728_1, 1728_2, 1728_3, 1728_4. Besides, the first storage elements 1726_1-1726_4 and the second storage elements 1728_1-1728_4 are cascaded in an interleaved manner such that each first storage element is followed by one second storage element, where the data input port D_{IN} is coupled to the leading first storage element 1726_1. When the data of the merged image is sequentially fed into the data input port D_{IN} (i.e., a merged video/3D video with the line-interleaved format is received at the data input port D_{IN}), the storage controller 1212 is arranged for only transmitting data read from the second storage elements 1728_1-1728_4 to the image/video processing device 102. When data of the non-merged image is sequentially fed into the data input port D_{IN} (i.e., a single video/2D video is received at the data input port D_{IN}), the storage controller 1212 is arranged for transmitting data read from part of the first storage elements 1726_1-1726_4 and part of the second storage elements 1728_1-1728_4 to the image/video processing device 102. As a person skilled in the art can readily understand details of the data buffering apparatus 1700 after reading above paragraphs directed to the data buffering apparatus 1200, further description is omitted here for brevity.

When the video input is a merged video with a line-interleaved/column-interleaved format, the storage elements of the first storage device and storage elements of the second storage device implemented in the exemplary data buffering apparatus 500/900/1200/1500/1600/1700 would be cascaded in an interleaved manner. Therefore, when data of the merged video is sequentially fed into the data input port D_{IN}, data stored in one storage element of the first storage device would be shifted to one storage element of the second storage device. In other words, during a period in which new partial data of a first input image (e.g., a left-view image) of a merged image is received at the data input port D_{IN}, the second storage device is used for buffering previously received partial data of the first input image, and the first storage device is used for buffering previously received partial data of a second input image (e.g., a right-view image); and during a next period in which new partial data of the second input image is received at the data input port D_{IN}, the second storage device is used for buffering previously received partial data of the second input image, and the first storage device is used for buffering previously received partial data of the first input image. In other words, each storage element (e.g., a shift register or a line buffer) in the first storage device and the second storage device is controlled to alternately store partial data of one input image and partial data of another input image. As each storage element in the first storage device and the second storage device is updated each time new partial data of an input image, either the first input image or the second input image, is received at the data input port D_{IN}, the power consumption of the data buffering apparatus is high. The present invention therefore proposes a modified data buffering apparatus which is capable of reducing the power consumption.

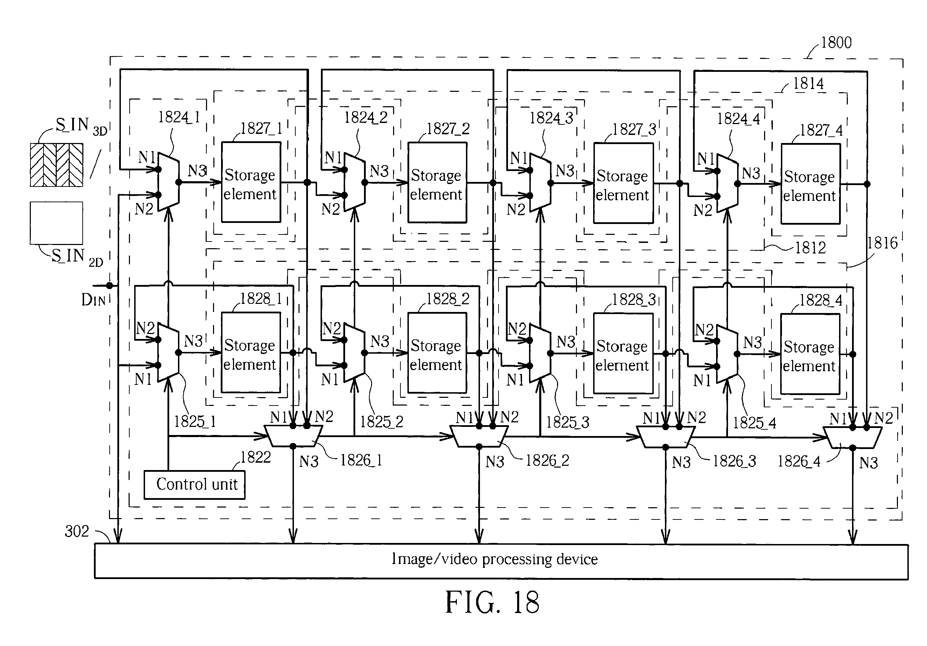

Please refer to FIG. 18, which is a diagram illustrating a fourth exemplary implementation of the data buffering apparatus 304 shown in FIG. 3/FIG. 4. The data buffering apparatus 304 shown in FIG. 3/FIG. 4 may be realized using the data buffering apparatus 1800 shown in FIG. 18. The data buffering apparatus 1800 includes a storage controller 1812 and a plurality of storage devices (e.g., a first storage device 1814 and a second storage device 1816). The storage controller 1812 includes a control unit 1822, a plurality of first multiplexers (MUXes) 1824_1, 1824_2, 1824_3, 1824_4, a plurality of second multiplexers 1825_1 , 1825_2, 1825_3, 1825_4, and a plurality of third multiplexers 1826_1, 1826_2, 1826_3, 1826_4. The first storage device 1814 includes a plurality of first storage elements (e.g., shift registers) 1827_1, 1827_2, 1827_3, 1827_4. The second storage device 1816 includes a plurality of second storage elements (e.g., shift registers) 1828_1, 1828_2, 1828_3, 1828_4. It should be noted that the number of the first storage elements, the number of the second storage elements and the number of the multiplexers are for illustrative purposes only. Actually, the number of the first storage elements, the number of the second storage elements and the number of the multiplexers depend on the operation performed by the image/video processing device 302. In this embodiment, the image/video processing device 302 is arranged to perform a 5-tap horizontal filtering operation. Hence, the first storage device 1814 has four storage elements, the second storage device 1816 has four storage elements, and the storage controller 2812 has twelve multiplexers. In another embodiment, the first storage device 1814 may have (N-1) storage elements, the second storage device 1816 may have (N-1) storage elements, and the storage controller 1812 may have 3*(N-1) multiplexers when the image/video processing device 302 is arranged to perform an N-tap horizontal filtering operation.

The control unit 1822 is arranged to control the internal interconnection of each of first multiplexers 1824_1-1824_4, second multiplexers 1825_1-1825_4 and third multiplexers 1826_1-1826_4. As shown in FIG. 18, each multiplexer has a first input node N1, a second input node N2 and an output node N3. When video input at the data input port D_{IN} is a merged video S_IN_{3D} with a column-interlaced format, the control unit 1822 controls each of first multiplexers 1824_1-1824_4, second multiplexers 1825_1-1825_4 and third multiplexers 1826_1-1826_4 to make its output node N3 alternately coupled to its first input node N1 and its second input node N2. Specifically, when the data of one merged image is sequentially fed into the data input port D_{IN}, the storage controller 1812 is arranged for alternately making the first storage elements 1827_1-1827_4 cascaded and making the second storage elements 1828_1-1828_4 cascaded, alternately coupling the data input port D_{IN} to a leading first storage element 1827_1 and a leading second storage element 1828_1, and alternately transmitting data read from the first storage elements 1827_1-1827_4 and data read from the second storage elements 1828_1-1828_4 to the image/video processing device 302, where when the first storage elements 1827_1-1827_4 are cascaded, the data input port D_{IN} is coupled to the leading first storage element 1827_1, and the data read from the first storage elements 1827_1-1827_4 is transmitted to the image/video processing device 302, and when the second storage elements 1828_1-1828_4 are cascaded, the data input port D_{IN} is coupled to the leading second storage element 1828_1, and the data read from the second storage elements 1828_1-1828_4 is transmitted to the image/video processing device 302.

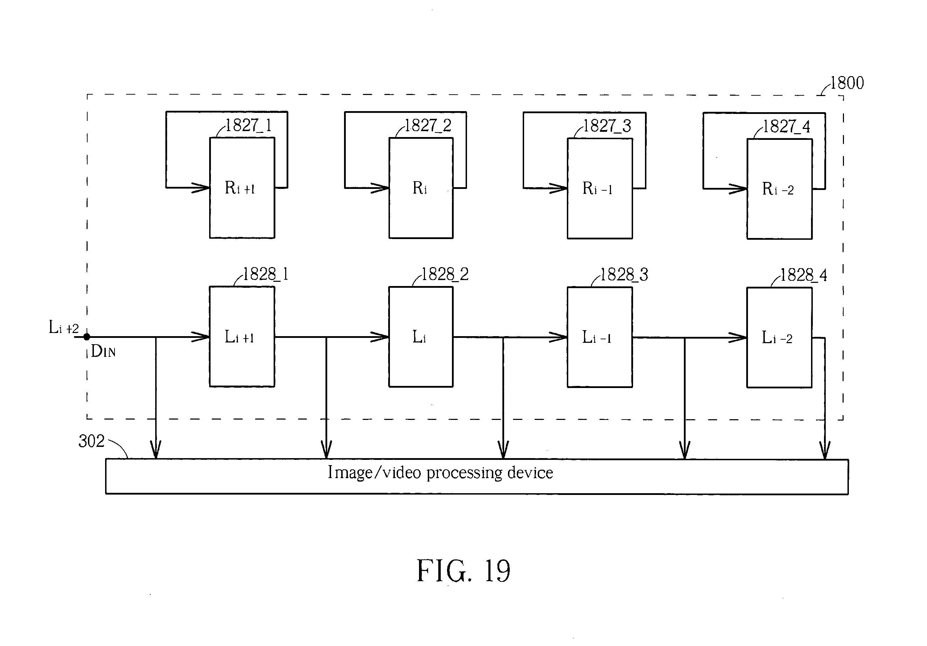

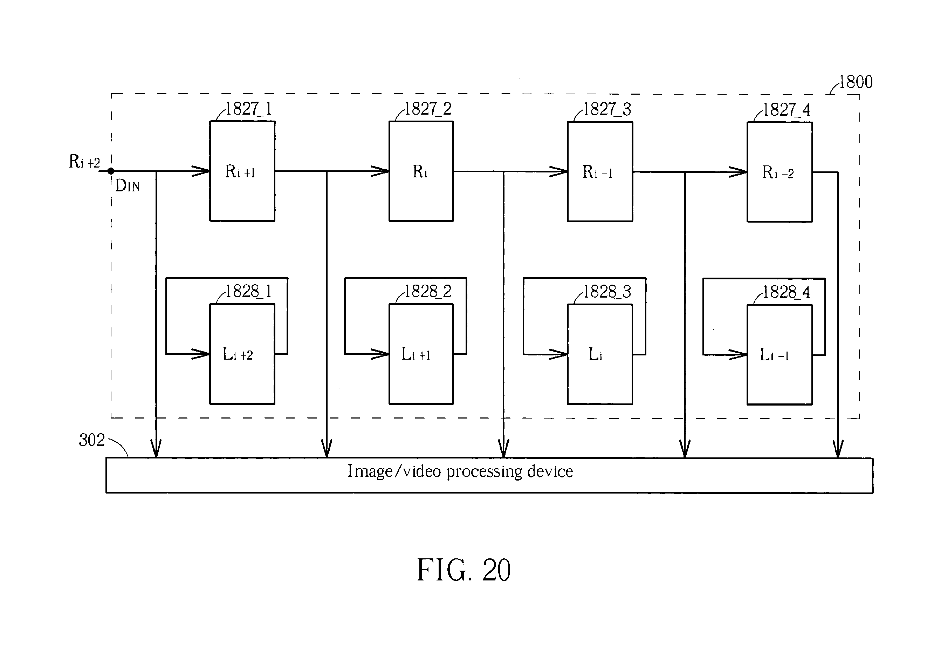

Please refer to FIG. 19 and FIG. 20. FIG. 19 is a diagram illustrating an equivalent circuit of the data buffering apparatus 1800 shown in FIG. 18 when a merged video composed of merged images is received. FIG. 20 is a diagram illustrating another equivalent circuit of the data buffering apparatus 1800 shown in FIG. 18 when a merged video composed of merged images is received. The image/video processing device 302 is arranged to perform a 5-tap horizontal filtering operation upon the column-interleaved video. In this case, the first storage device 1814 is dedicated to buffering partial data of a right-view image, and the second storage device 1816 is dedicated to buffering partial data of a left-view image. Hence, when data of the left-view image is fed into the data input port D_{IN}, the data buffering apparatus 1800 would have the configuration shown in FIG. 19; and when data of the right-view image is fed into the data input port D_{IN}, the data buffering apparatus 1800 would have the configuration shown in FIG. 20.

To process i^{th} pixel of the left-view image, a pixel window is required to be centered at the i^{th} pixel Lᵢ. The pixels Lᵢ₋₂, Rᵢ₋₂, Lᵢ₋₁, Rᵢ₋₁, Lᵢ, Rᵢ, Lᵢ₊₁, Rᵢ₊₁, Lᵢ₊₂ located at the same row of the merged image with the left-view image and the right-view image arranged in the column-interleaved format are sequentially fed into the data input port D_{IN}. In response to the incoming pixel data, the data buffering apparatus 1800 would alternately switch between the configuration shown in FIG. 19 and the configuration shown in FIG. 20. When the (i+2)^{th} pixel Lᵢ₊₂ of the left-view image is available at the data input port D_{IN}, the data buffering apparatus 1800 would have the configuration shown in FIG. 19. Hence, due to switching between different configurations in response to the incoming data, the first storage elements 1827_1-1827_4 would store pixels Rᵢ₊₁-Rᵢ₋₂, respectively; and the second storage elements 1828_1-1828_4 would store pixels Lᵢ₊₁-Lᵢ₋₂, respectively. As the pixels Lᵢ₊₂-Lᵢ₋₂ are concurrently transmitted to the image/video processing device 302, the 5-tap horizontal filtering operation for the center pixel Lᵢ is performed by the image/video processing device 302. When the next pixel Rᵢ₊₂ is fed into the data input port D_{IN}, the data buffering apparatus 1800 would switch from the configuration shown in FIG. 19 to the configuration shown in FIG. 20. Hence, the second storage elements 1828_1-1828_4 would store pixels Lᵢ₊₂-Lᵢ₋₁, respectively. Besides, the pixels Rᵢ₊₂-Rᵢ₋₂ are concurrently transmitted to the image/video processing device 302, and the 5-tap horizontal filtering operation for the center pixel Rᵢ is performed by the image/video processing device 302.

When video input at the data input port D_{IN} is a single video (i.e., a 2D video) S_IN_{2D} composed of a plurality of non-merged images corresponding to a single view, the control unit 1822 controls first multiplexers 1824_1-1824_4, second multiplexers 1825_1-1825_4 and third multiplexers 1826_1-1826_4 to use only one of the first storage device 1814 and the second storage device 1816 for buffering the incoming image/video data. In one exemplary design, the first storage device 1814 is selected for buffering pixel data of non-merged images included in a 2D video. Thus, the control unit 1822 controls each of first multiplexers 1824_1-1824_4, second multiplexers 1825_1-1825_4 and third multiplexers 1826_1-1826_4 to make its output node N3 coupled to its second input node N2. Specifically, when data of the non-merged image is sequentially fed into the data input port D_{IN}, the storage controller 1812 is arranged for only making the first storage elements 1828_1-1828_4 cascaded, only coupling the data input port D_{IN} to the leading first storage element 1828_1, and only transmitting the data read from the first storage elements 1828_1-1828_4 to the image/video processing device 302. In another exemplary design, the second storage device 1816 is selected for buffering pixel data of non-merged images included in the 2D video. Thus, the control unit 1822 controls each of first multiplexers 1824_1-1824_4, second multiplexers 1825_1-1825_4 and third multiplexers 1826_1-1826_4 to make its output node N3 coupled to its first input node N1. Specifically, when data of the non-merged image is sequentially fed into the data input port D_{IN}, the storage controller 1812 is arranged for only making the second storage elements 1828_1-1828_4 cascaded, only coupling the data input port D_{IN} to the leading second storage element 1828_1, and only transmitting the data read from the second storage elements 1828_1-1828_4 to the image/video processing device 302.

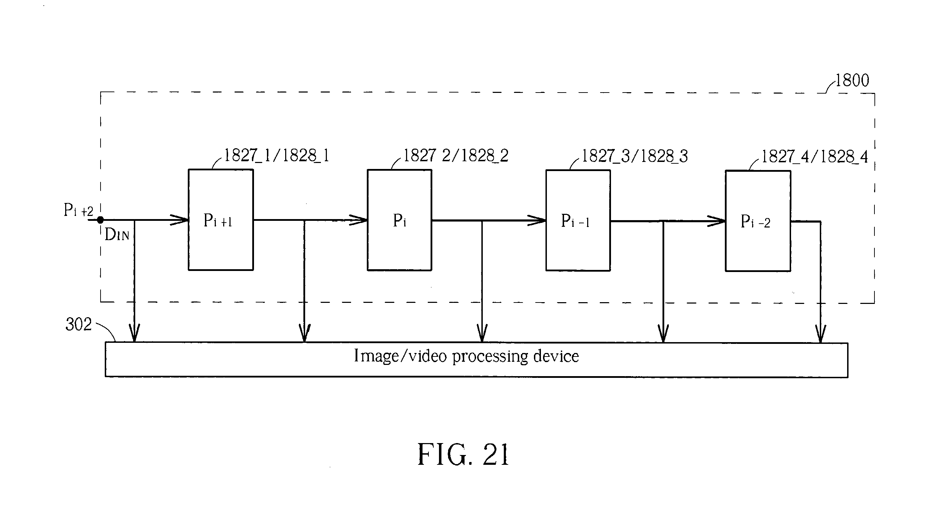

Please refer to FIG. 21, which is a diagram illustrating an equivalent circuit of the data buffering apparatus 1800 shown in FIG. 18 when a single video composed of non-merged images is received. In this case, to process i^{th} pixel Pᵢ of the single 2D image, a pixel window is required to be centered at the i^{th} pixel Pᵢ. The pixels Pᵢ₋₂, Pᵢ₋₁, Pᵢ, Pᵢ₊₁, Pᵢ₊₂ located at the same row of the single 2D image are sequentially fed into the data input port D_{IN}. As can be seen from FIG. 21, when the (i+2)^{th} pixel Pᵢ₊₂ is available at the data input port D_{IN}, the cascaded storage elements would store pixels Pᵢ₊₁-Pᵢ₋₂, respectively. As the pixels Pᵢ₊₂-Pᵢ₋₂ are concurrently transmitted to the image/video processing device 302, the 5-tap horizontal filtering operation for the center pixel Pi is performed by the image/video processing device 302.

The aforementioned exemplary data buffering apparatus 1800 is used to realize the data buffering apparatus 304 shown in FIG. 3/FIG. 4, where the video input is either a column-interleaved 3D video or a 2D video. With proper modification made to data buffering apparatus 1800 for replacing the shift registers with line buffers, a modified data buffering apparatus may be used to realize the data buffering apparatus 104 shown in FIG. 1/FIG. 2.

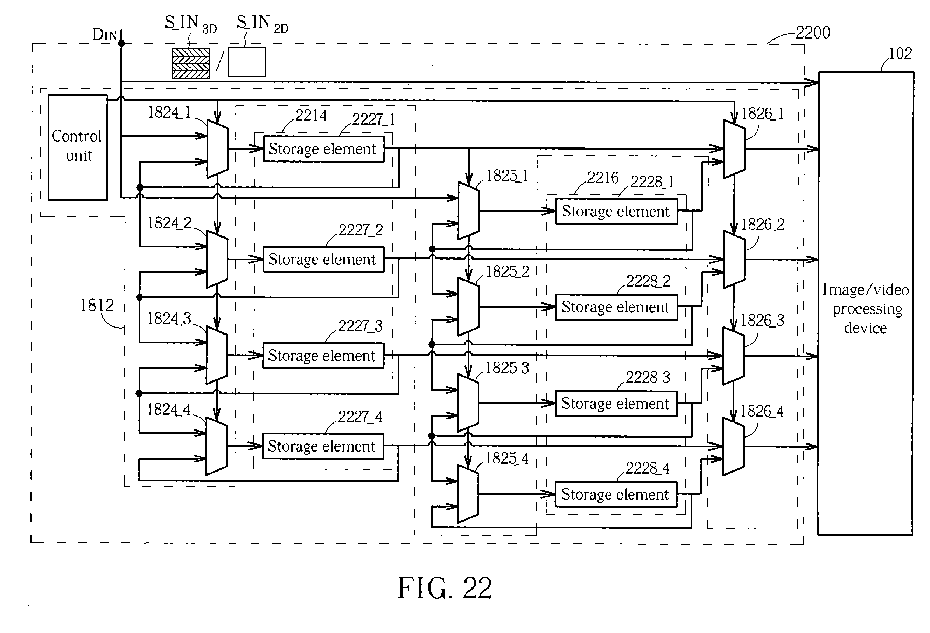

FIG. 22 is a diagram illustrating a fourth exemplary implementation of the data buffering apparatus 104 shown in FIG. 1/FIG. 2. The data buffering apparatus 104 shown in FIG. 1/FIG. 2 may be realized using the data buffering apparatus 2200 shown in FIG. 22. The data buffering apparatus 2200 includes the aforementioned storage controller 1812 and a plurality of storage devices (e.g., a first storage device 2214 and a second storage device 2216). The first storage device 2214 includes a plurality of first storage elements (e.g., line buffers) 2227_1, 2227_2, 2227_3,2227_4. The second storage device 2216 includes a plurality of second storage elements (e.g., line buffers) 2228_1, 2228_2, 2228_3, 2228_4.

when the data of one merged image is sequentially fed into the data input port D_{IN} (i.e., a merged video/3D video S_IN_{3D} with a line-interleaved format is received at the data input port D_{IN}), the storage controller 1812 is arranged for alternately making the first storage elements 2227_1-2227_4 cascaded and making the second storage elements 2228_1-2228_4 cascaded, alternately coupling the data input port D_{IN} to the leading first storage element 2227_1 and the leading second storage element 2228_1, and alternately transmitting data read from the first storage elements 2227_1-2227_4 and data read from the second storage elements 2228_1-2228_4 to the image/video processing device 102, where when the first storage elements 2227_1-2227_4 are cascaded, the data input port D_{IN} is coupled to the leading first storage element 2227_1, and the data read from the first storage elements 2227_1-2227_4 is transmitted to the image/video processing device 102, and when the second storage elements 2228_1-2228_4 are cascaded, the data input port D_{IN} is coupled to the leading second storage element 2228_1, and the data read from the second storage elements 2228_1-2228_4 is transmitted to the image/video processing device 102.

when data of the non-merged image is sequentially fed into the data input port D_{IN} (i.e., a single video/2D video S_IN_{2D} is received at the data input port D_{IN}), the storage controller 1812 is arranged for only making the first/second storage elements 2227_1-2227_4/2228_1-2228_4 cascaded, only coupling the data input port D_{IN} to the leading first/second storage element 2227_1/2228_1, and only transmitting the data read from the first/second storage elements 2227_1-2227_4/2228_1-2228_4 to the image/video processing device 102.

As a person skilled in the art can readily understand details of the data buffering apparatus 2200 after reading above paragraphs directed to the data buffering apparatus 1800, further description is omitted here for brevity.

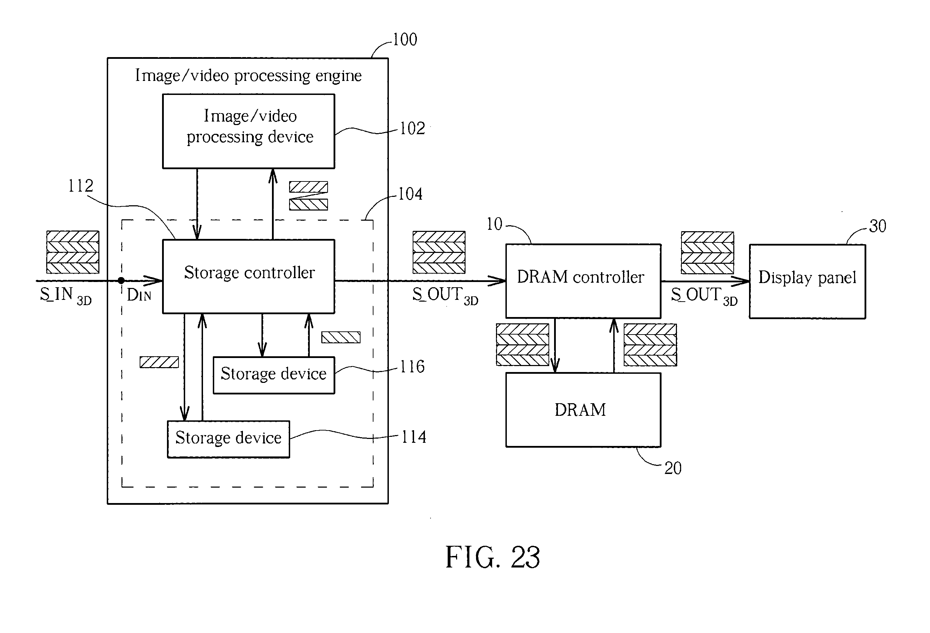

In above-mentioned embodiments, the image/video processing engine 100/300 is located after the DRAM controller 10/40 to take advantage of the FRC function of the DRAM controller for format conversion needed. However, these are for illustrative purposes only, and are not meant to be limitations of the present invention. That is, any image/video processing system using the proposed image/video processing engine 100/300 falls within the scope of the present invention. In practice, the proposed image/video processing engine may be located before the DRAM controller, after the DRAM controller or integrated with the DRAM controller, depending upon actual design consideration/requirement. In the aforementioned case where the proposed image/video processing engine is located after the DRAM controller, the proposed image/video processing engine is arranged to process a merged video including merged images each having a display 3D format. However, in a case where the proposed image/video processing engine is located before the DRAM controller, the proposed image/video processing engine is arranged to process a merged video including merged images each having an input 3D format. Please refer to FIG. 23, which is a block diagram illustrating yet another image/video processing engine according to an embodiment of the present invention. The major difference between the exemplary designs shown in FIG. 1 and FIG. 23 is that the image/video processing engine 100 processes a video input S_IN_{3D} with a line-interleaved format, and generates a processed video output S_OUT_{3D} with a line-interleaved format to the following DRAM controller 10. In this embodiment, the DRAM controller 10 and the DRAM 20 are used for buffering the processed video input S_OUT_{3D} generated from the preceding image/video processing engine 100, and then reading the buffered processed video input S_OUT_{3D} from the DRAM 20 to the display panel (e.g., a pattern-retarder panel or a shutter-glasses panel) 30. As mentioned above, the DRAM controller 10 may support an FRC function. Hence, the DRAM controller 10 may also perform the frame rate conversion upon the processed video input S_OUT_{3D}. Alternatively, the processed video input S_OUT_{3D} read from the DRAM 20 may be transmitted to another image/video processing engine (not shown) located between the DRAM controller 10 and the display panel 30 shown in FIG. 23 for further processing. Similarly, regarding the image/video processing engine 300 shown in FIG. 3, it may be located before the DRAM controller in an alternative design, and is therefore arranged to process a video input S_IN_{3D} with a column-interleaved format, and generate a processed video output S_OUT_{3D} with a column-interleaved format to the following DRAM controller.

All combinations and sub-combinations of the above-described features also belong to the invention.

## Claims

1. A data buffering apparatus (104, 304, 500, 900, 1200, 1500, 1600, 1700, 1800, 2200), **characterized by**:
a plurality of storage devices (114, 116, 314, 316, 514, 516, 914, 916, 1214, 1216, 1514, 1516, 1614, 16161714, 1716, 1814, 1816, 2214, 2216), each arranged for only storing a partial data of one of a plurality of input images merged in a merged image when data of the merged image is received at a data input port of the data buffering apparatus; and
a storage controller (112, 312, 512, 912, 1212, 1812), coupled to the storage devices, the storage controller arranged for alternately controlling stored partial data of the input images to be transmitted to an image/video processing device (102, 302) when the data of the merged image is received at the data input port.

2. The data buffering apparatus (500, 1 500) of claim 1, **characterized in that** the storage devices (514, 516, 1514, 1516) include a first storage device (514, 1514) and a second storage device (516, 1 516); the first storage device (514, 1514) has a plurality of first storage elements (526_1, 526_2, 526_3, 526_4, 1526_1, 1526_2, 1526_3, 1526_4); the second storage device (516, 1516) has a plurality of second storage elements (528_1, 528_2, 528_3, 528_4, 1528_1, 1528_2, 1528_3, 1528_4); and when the data of the merged image is sequentially fed into the data input port, the storage controller (512) is arranged for making the first storage elements (526_1, 526_2, 526_3, 526_4, 1526_1, 1526_2, 1526_3, 1526_4) and the second storage elements (528_1, 528_2, 528_3, 528_4, 1528_1, 1528_2, 1528_3, 1528_4) cascaded in an interleaved manner such that each first storage element is followed by one second storage element, and transmitting data read from the second storage elements (528_1, 528_2, 528_3, 528_4, 1528_1, 1528_2, 1528_3, 1528_4) to the image/video processing device (102, 302), where the data input port is coupled to a leading first storage element (526_1, 1526_1), and data is not read from the first storage elements (526_1, 526_2, 526_3, 526_4, 1526_1, 1526_2, 1526_3, 1526_4) to the image/video processing device (102, 302).

3. The data buffering apparatus (500, 1500) of claim 2, **characterized in that** the image/video processing device (102, 302) is further arranged for processing a non-merged image; and when data of the non-merged image is sequentially fed into the data input port, the storage controller (512) is further arranged for disconnecting the first storage elements (526_1, 526_2, 526_3, 526_4, 1526_1, 1526_2, 1526_3, 1526_4) from the second storage elements (528_1, 528_2, 528_3, 528_4, 1528_1, 1528_2, 1528_3, 1528_4), making the second storage elements (528_1, 528_2, 528_3, 528_4, 1528_1, 1528_2, 1528_3, 1528_4) cascaded, and transmitting data read from the second storage elements (528_1, 528_2, 528_3, 528_4, 1528_1, 1528_2, 1528_3, 1528_4) to the image/video processing device (102, 302), where the data input port is coupled to a leading second storage element (528_1, 1528_1).

4. The data buffering apparatus (900, 1200, 1600, 1700) of claim 1, **characterized in that** the storage devices (914, 916, 1214, 1216, 1614, 1616, 1714, 1716) include a first storage device (914, 1214, 1614, 1714) and a second storage device (916, 1216, 1616, 1716); the first storage device (914, 1214, 1614, 1714) has a plurality of first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4); the second storage device (916, 1216, 1616, 1 716) has a plurality of second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4); the first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4) and the second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4) are cascaded in an interleaved manner such that each first storage element is followed by one second storage element; the data input port is coupled to a leading first storage element (926_1, 1226_1, 1626_1, 1726_1); and when the data of the merged image is sequentially fed into the data input port, the storage controller (912, 1212) is arranged for transmitting data read from the second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4) to the image/video processing device (102, 302), where data is not read from the first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4) to the image/video processing device (102, 302).

5. The data buffering apparatus (900, 1200, 1600, 1700) of claim 4, **characterized in that** the image/video processing device (102, 302) is further arranged for processing a non-merged image; and when data of the non-merged image is sequentially fed into the data input port, the storage controller (912, 1212) is further arranged for transmitting data read from at least a portion of the first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4) and at least a portion the second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4) to the image/video processing device (102, 302).

6. The data buffering apparatus (1800, 2200) of claim 1, **characterized in that** the storage devices (1814, 1816, 2214, 2216) include a first storage device (1814, 2214) and a second storage device (1816, 2216); the first storage device (1814, 2214) has a plurality of first storage elements (1827_1, 1827_2, 1827_3, 1827_4, 2227_1, 2227_2, 2227_3, 2227_4), and the second storage device (1816, 2216) has a plurality of second storage elements (1828_1, 1828_2, 1828_3, 1828_4, 2228_1, 2228_2, 2228_3, 2228_4); and when the data of the merged image is sequentially fed into the data input port, the storage controller (1812) is arranged for alternately making the first storage elements (1827_1, 1827_2, 1827_3, 1827_4, 2227_1, 2227_2, 2227_3, 2227_4) cascaded and making the second storage elements (1828_1, 1828_2, 1828_3, 1828_4, 2228_1, 2228_2, 2228_3, 2228_4) cascaded, alternately coupling the data input port to a leading first storage element (1827_1, 2227_1) and a leading second storage element (1828_1, 2228_1); and alternately transmitting data read from the first storage elements (1827_1, 1827_2, 1827_3, 1827_4, 2227_1, 2227_2, 2227_3, 2227_4) and data read from the second storage elements (1828_1, 1828_2, 1828_3, 1828_4, 2228_1, 2228_2, 2228_3, 2228_4) to the image/video processing device (102, 302), where when the first storage elements (1827_1, 1827_2, 1827_3, 1827_4, 2227_1, 2227_2, 2227_3, 2227_4) are cascaded, the data input port is coupled to the leading first storage element (1827_1, 2227_1), and the data read from the first storage elements (1827_1, 1827_2, 1827_3, 1827_4, 2227_1, 2227_2, 2227_3, 2227_4) is transmitted to the image/video processing device (102, 302), and when the second storage elements (1828_1, 1828_2, 1828_3, 1828_4, 2228_1, 2228_2, 2228_3, 2228_4) are cascaded, the data input port is coupled to the leading second storage element (1828_1, 2228_1), and the data read from the second storage elements (1828_1, 1828_2, 1828_3, 1828_4, 2228_1, 2228_2, 2228_3, 2228_4) is transmitted to the image/video processing device (102, 302).

7. The data buffering apparatus (1800, 2200) of claim 6, **characterized in that** the image/video processing device (102, 302) is further arranged for processing a non-merged image; and when data of the non-merged image is sequentially fed into the data input port, the storage controller (1812) is further arranged for only making the second storage elements (1828_1, 1828_2, 1828_3, 1828_4, 2228_1, 2228_2, 2228_3, 2228_4) cascaded, only coupling the data input port to the leading second storage element (1828_1, 2228_1), and only transmitting the data read from the second storage elements (1828_1, 1828_2, 1828_3, 1828_4, 2228_1, 2228_2, 2228_3, 2228_4) to the image/video processing device (102, 302).

8. A data buffering method, **characterized by**:
when receiving data of a merged image composed of a plurality of input images:
utilizing a plurality of storage devices (114, 116, 314, 316, 514, 516, 914, 916, 1214, 1216, 1514, 1516, 1614, 16161714, 1716, 1814, 1816, 2214, 2216) to respectively store partial data of the input images, wherein each of the storage devices (114, 116, 314, 316, 514, 516, 914, 916, 1214, 1216, 1514, 1516, 1614, 16161714, 1716, 1814, 1816, 2214, 2216) only stores a partial data of one of the input images; and
alternately controlling the stored partial data of the input images to be transmitted to an image/video processing device (102, 302).

9. The data buffering method of claim 8, **characterized in that** the storage devices (514, 516, 1 514, 1516) include a first storage device (514, 1514) and a second storage device (516, 1516); the first storage device (514, 1514) has a plurality of first storage elements (526_1, 526_2, 526_3, 526_4, 1526_1, 1526_2, 1526_3, 1526_4); the second storage device (516, 1516) has a plurality of second storage elements (528_1, 528_2, 528_3, 528_4, 1528_1, 1528_2, 1528_3, 1528_4); the step of utilizing the storage devices (514, 516, 1 514, 1516) to respectively store partial data of the input images comprises: when the data of the merged image is sequentially fed into the data input port, making the first storage elements (526_1, 526_2, 526_3, 526_4, 1526_1, 1526_2, 1526_3, 1526_4) and the second storage elements (528_1, 528_2, 528_3, 528_4, 1528_1, 1528_2, 1528_3, 1528_4) cascaded in an interleaved manner such that each first storage element is followed by one second storage element, where the data input port is coupled to a leading first storage element (526_1, 1526_1); and the step of alternately controlling the stored partial data of the input images to be transmitted to the image/video processing device (102, 302) comprises: transmitting data read from the second storage elements (528_1, 528_2, 528_3, 528_4, 1528_1, 1528_2, 1528_3, 1528_4) to the image/video processing device (102, 302), where data is not read from the first storage elements (526_1, 526_2, 526_3, 526_4, 1526_1, 1526_2, 1526_3, 1526_4) to the image/video processing device (102, 302).

10. The data buffering method of claim 9, **characterized in that** the image/video processing device (102, 302) is further arranged for processing a non-merged image; and the data buffering method further comprises:
when data of the non-merged image is sequentially fed into the data input port, disconnecting the first storage elements (526_1, 526_2, 526_3, 526_4, 1526_1, 1526_2, 1526_3, 1526_4) from the second storage elements (528_1, 528_2, 528_3, 528_4, 1528_1, 1528_2, 1528_3, 1528_4), and making the second storage elements (528_1, 528_2, 528_3, 528_4, 1528_1, 1528_2, 1528_3, 1528_4) cascaded, where the data input port is coupled to a leading second storage element (528_1, 1528_1); and
transmitting data read from the second storage elements (528_1, 528_2, 528_3, 528_4, 1528_1, 1528_2, 1528_3, 1528_4) to the image/video processing device (102, 302).

11. The data buffering method of claim 8, **characterized in that** the storage devices (914, 916, 1214, 1216, 1614, 1616, 1714, 1716) include a first storage device (914, 1214, 1614, 1 714) and a second storage device (916, 1216, 1616, 1 716); the first storage device (914, 1214, 1614, 1714) has a plurality of first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4); the second storage device (916, 1216, 1616, 1716) has a plurality of second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4); the first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4) and the second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4) are cascaded in an interleaved manner such that each first storage element is followed by one second storage element; the data input port is coupled to a leading first storage element (926_1, 1226_1, 1626_1, 1726_1); and the step of alternately controlling the stored partial data of the input images to be transmitted to the image/video processing device (102, 302) comprises: when the data of the merged image is sequentially fed into the data input port, transmitting data read from the second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4) to the image/video processing device (102, 302), where data is not read from the first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4) to the image/video processing device (102, 302).

12. The data buffering method of claim 11, **characterized in that** the image/video processing device (102, 302) is further arranged for processing a non-merged image; and the data buffering method further comprises:
when data of the non-merged image is sequentially fed into the data input port, transmitting data read from at least a portion of the first storage elements (926_1, 926_2, 926_3, 926_4, 1226_1, 1226_2, 1226_3, 1226_4, 1626_1, 1626_2, 1626_3, 1626_4, 1726_1, 1726_2, 1726_3, 1726_4) and at least a portion of the second storage elements (928_1, 928_2, 928_3, 928_4, 1228_1, 1228_2, 1228_3, 1228_4, 1628_1, 1628_2, 1628_3, 1628_4, 1728_1, 1728_2, 1728_3, 1728_4) to the image/video processing device (102, 302).

13. The data buffering method of claim 8, **characterized in that** the storage devices (1814, 1816, 2214, 2216) include a first storage device (1814, 2214) and a second storage device (1816, 2216); the first storage device (1814, 2214) has a plurality of first storage elements (1827_1, 1827_2, 1827_3, 1827_4, 2227_1, 2227_2, 2227_3, 2227_4), and the second storage device (1816, 2216) has a plurality of second storage elements (1828_1, 1828_2, 1828_3, 1828_4, 2228_1, 2228_2, 2228_3, 2228_4); and the step of utilizing the storage devices (1814, 1816, 2214, 2216) to respectively store partial data of the input images comprises: when the data of the merged image is sequentially fed into the data input port, alternately making the first storage elements (1827_1, 1827_2, 1827_3, 1827_4, 2227_1, 2227_2, 2227_3, 2227_4) cascaded and making the second storage elements (1828_1, 1828_2, 1828_3, 1828_4, 2228_1, 2228_2, 2228_3, 2228_4) cascaded, and alternately coupling the data input port to a leading first storage element (1827_1, 2227_1) and a leading second storage element (1828_1, 2228_1); the step of alternately controlling the stored partial data of the input images to be transmitted to the image/video processing device (102, 302) comprises: alternately transmitting data read from the first storage elements (1827_1, 1827_2, 1827_3, 1827_4, 2227_1, 2227_2, 2227_3, 2227_4) and data read from the second storage elements (1828_1, 1828_2, 1828_3, 1828_4, 2228_1, 2228_2, 2228_3, 2228_4) to the image/video processing device (102, 302); when the first storage elements (1827_1, 1827_2, 1827_3, 1827_4, 2227_1, 2227_2, 2227_3, 2227_4) are cascaded, the data input port is coupled to the leading first storage element (1827_1, 2227_1), and the data read from the first storage elements (1827_1, 1827_2, 1827_3, 1827_4, 2227_1, 2227_2, 2227_3, 2227_4) is transmitted to the image/video processing device (102, 302); and when the second storage elements (1828_1, 1828_2, 1828_3, 1828_4, 2228_1, 2228_2, 2228_3, 2228_4) are cascaded, the data input port is coupled to the leading second storage element (1828_1, 2228_1), and the data read from the second storage elements (1828_1, 1828_2, 1828_3, 1828_4, 2228_1, 2228_2, 2228_3, 2228_4) is transmitted to the image/video processing device (102, 302).

14. The data buffering method of claim 13, **characterized in that** the image/video processing device (102, 302) is further arranged for processing a non-merged image; and the data buffering method further comprises:
when data of the non-merged image is sequentially fed into the data input port, only making the second storage elements (1828_1, 1828_2, 1828_3, 1828_4, 2228_1, 2228_2, 2228_3, 2228_4) cascaded, only coupling the data input port to the leading second storage element (1828_1, 2228_1), and only transmitting the data read from the second storage elements (1828_1, 1828_2, 1828_3, 1828_4, 2228_1, 2228_2, 2228_3, 2228_4) to the image/video processing device (102, 302).

15. The data buffering apparatus (104, 304, 500, 900, 1200, 1500, 1600, 1700, 1800, 2200) of claim 1 or the data buffering method of claim 8, **characterized in that** the input images in the merged image are arranged in one of a column-interleaved format and a line-interleaved format.
